# EUROPEAN PATENT APPLICATION

(11) **EP 2 665 028 A1**
(43) Date of publication of application: **20.11.2013**
(21) Application number: 13165907.0
(22) Date of filing: 30.04.2013
(51) Int. Cl.: G06Q 30/02, H02J 17/00

(54) **Mobile terminal and control method thereof**

(30) Priority: 14.05.2012 KR 20120051122; 12.06.2012 KR 20120062750
(71) Applicant: LG Electronics, Inc., Seoul, 150-721 (KR)
(72) Inventor: Han, Kiwon, Seoul (KR); Kim, Youngtae, Seoul (KR); Chong, Kabsung, Seoul (KR); Yi, Mizi, Seoul (KR)
(74) Representative: Cabinet Plasseraud

(57) **Abstract**

The present disclosure relates to a mobile terminal, and more particularly, to a mobile terminal capable of wireless charging and a control method thereof. A mobile terminal according to an embodiment of the present disclosure may include a power receiving unit formed to receive power in a wireless manner from a wireless charging pad; a wireless communication unit configured to transmit user information to a server or the wireless charging pad, and receive advertisement content associated with the user information from the server or the wireless charging pad; a display unit formed to display the advertisement content; and a controller configured to manage history information displayed with the advertisement content on the display unit and control the power receiving unit to receive power in a wireless manner from the wireless charging pad based on the history information.

## Description

### BACKGROUND OF THE INVENTION

### 1. Field of the invention

The present disclosure relates to a mobile terminal, and more particularly, to a mobile terminal capable of wireless charging and a control method thereof.

### 2. Description of the related art

Terminals can be classified into mobile or portable terminals and a stationary terminals based on its mobility. Furthermore, the mobile terminals can be further classified into handheld terminals and vehicle mount terminals based on whether or not it can be directly carried by a user.

As it becomes multifunctional, for example, such a terminal is allowed to capture still images or moving images, play music or video files, play games, receive broadcast and the like, so as to be implemented as an integrated multimedia player. Moreover, the improvement of structural or software elements of the terminal may be taken into consideration to support and enhance the functions of the terminal.

As the terminal becomes highly functional, the battery consumption of the terminal has been rapidly increased. However, the user wants to not only have the terminal with high performance but also use it for longer period of time. Accordingly, studies on wireless charging technologies have been continuously carried out to satisfy the user's requirement. Consequently, from the standpoint of a business provided with a wireless charging pad, a method of providing power for the wireless charging of the terminal with free of charge as well as creating profit has been considered. Furthermore, from the standpoint of the user, a method for charging the terminal in a wireless manner with free of charge has been taken into consideration.

### SUMMARY OF THE INVENTION

An object of the present disclosure is to provide a mobile terminal for enhancing the convenience of a business who provides advertisement content in charging the user's mobile terminal battery in a wireless manner and a control method thereof.

Another object of the present disclosure is to provide a mobile terminal capable of wireless charging using various payment means and a control method thereof.

A mobile terminal according to an embodiment of the present disclosure may include a power receiving unit formed to receive power in a wireless manner from a wireless charging pad; a wireless communication unit configured to transmit user information to a server or the wireless charging pad, and receive advertisement content associated with the user information from the server or the wireless charging pad; a display unit formed to display the advertisement content; and a controller configured to manage history information displayed with the advertisement content on the display unit and control the power receiving unit to receive power in a wireless manner from the wireless charging pad based on the history information.

As an embodiment, the wireless communication unit may receive service guide information for configuring power receiving condition information from the server or the wireless charging pad, and the controller may display the received service guide information on the display unit, and configure the power receiving condition information based on the user's selection of the displayed service guide information.

As an embodiment, the controller may determine whether or not to receive power from the wireless charging pad using the history information and the power receiving condition information displayed with the advertisement content.

As an embodiment, the controller may control the power receiving unit to receive power in a wireless manner from the wireless charging pad when the history information satisfies the power receiving condition, and display a popup window indicating that the power receiving condition is not satisfied on the display unit when the history information does not satisfies the power receiving condition.

As an embodiment, the controller may adjust an amount of power to be received in a wireless manner by the power receiving unit from the wireless charging pad based on the history information when the history information does not satisfy the power receiving condition.

As an embodiment, the controller may transmit the history information and the power receiving condition information to the server or the wireless charging pad, and receive any one of a wireless charging accept message and a wireless charging reject message from the server or the wireless charging pad.

As an embodiment, the service guide information may include at least one of an amount of power to be received in a wireless manner from the wireless charging pad, a time point of displaying the advertisement content based on the power receiving time point, a number of displaying the advertisement content, and a time of displaying the advertisement content.

As an embodiment, the controller may manage the history information in a different manner according to the time point of displaying the advertisement content based on the power receiving time point.

As an embodiment, the controller may control the power receiving unit to receive power in a wireless manner from the wireless charging pad regardless of whether or not to display the advertisement content when the time point of displaying the advertisement content is configured subsequent to the power receiving time point, and store history information on the display of the advertisement content in a memory to use it when required to receive power in a wireless manner again from the wireless charging pad later.

As an embodiment, the controller may measure an amount of power received in a wireless manner by the power receiving unit from the wireless charging pad, and display a progress bar indicating the power amount information on the display unit.

A mobile terminal according to another embodiment of the present disclosure may include a power receiving unit formed to receive power in a wireless manner from a wireless charging pad; a wireless communication unit configured to transmit user information to a server or the wireless charging pad, and receive point information associated with the user information from the server or the wireless charging pad; and a controller configured to control the power receiving unit to display a menu for selecting whether or not to receive power and receive power in a wireless manner from the wireless charging pad based on the selection of the menu, and transmit at least one of the received power amount information and point deduction information according to the received power amount information to the server or the wireless charging pad to deduct the point based on the received power amount.

As an embodiment, the menu may be a menu for selecting whether or not to receive power using the point information, and the controller may display guide information on point deduction along with the menu.

As an embodiment, the wireless communication unit may receive point guide information for determining an amount of power to be received from the server or the wireless charging pad, and the controller may configure power receiving condition information based on the selection of the point guide information, and control the power receiving unit to receive power in a wireless manner from the wireless charging pad based on the power receiving condition information.

As an embodiment, the mobile terminal may further include a display unit, wherein the controller controls the power receiving unit to receive power in a wireless manner from the wireless charging pad when the point information satisfies the power receiving condition, and displays a message indicating that the power receiving condition is not satisfied on the display unit when the point information does not satisfies the power receiving condition.

As an embodiment, the controller may display advertisement content on the display unit when the point information does not satisfy the power receiving condition, and control the power receiving unit to receive power in a wireless manner from the wireless charging pad based on the history information displayed with the advertisement content on the display unit.

As an embodiment, the controller may adjust an amount of power to be received in a wireless manner by the power receiving unit from the wireless charging pad based on the point information when the point information does not satisfy the power receiving condition.

As an embodiment, the controller may transmit the point information and the power receiving condition information to the server or the wireless charging pad, and receive any one of a wireless charging accept message and a wireless charging reject message from the server or the wireless charging pad.

As an embodiment, the point guide information may include at least one of an amount of power to be received in a wireless manner from the wireless charging pad and points to be deducted based on the amount of power to be received.

As an embodiment of the present disclosure relates to a mobile terminal including a power receiving unit formed to receive power in a wireless manner from a wireless charging pad. A control method of the mobile terminal may include transmitting user information to a server or the wireless charging pad when the wireless charging pad is sensed; receiving advertisement content associated with the user information from the server or the wireless charging pad; displaying the advertisement content on the display unit; managing history information displayed with the advertisement content on the display unit; and controlling the power receiving unit to receive power in a wireless manner from the wireless charging pad based on the history information.

Another embodiment of the present disclosure relates to a control method of a mobile terminal including a power receiving unit formed to receive power in a wireless manner from a wireless charging pad. A control method of the mobile terminal may include transmitting user information to a server or the wireless charging pad, and receiving point information associated with the user information from the server or the wireless charging pad; displaying a menu for selecting whether or not to receive power; controlling the power receiving unit to receive power in a wireless manner from the wireless charging pad based on the selection of the menu; and transmitting at least one of the received power amount information and point deduction information according to the received power amount information to the server or the wireless charging pad to deduct the point based on the received power amount.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a block diagram illustrating a mobile terminal according to the present disclosure;
FIGS. 2A and 2B are perspective views illustrating an external appearance of the mobile terminal associated with the present disclosure;
FIG. 3 is a flow chart for explaining a mobile terminal according to an embodiment of the present disclosure;
FIGS. 4A and 4B are flow charts for explaining a mobile terminal system according to an embodiment of the present disclosure;
FIG. 4C is a conceptual view for explaining an embodiment in which a wireless charging pad according to the present disclosure performs an analog ping process;
FIGS. 5A through 5D are conceptual views illustrating a first operation example of a mobile terminal according to FIG. 4;
FIGS. 6A and 6B are conceptual views illustrating a second operation example of a mobile terminal according to FIG. 4;
FIG. 7 is a flow chart for explaining a mobile terminal system according to another embodiment of the present disclosure;
FIGS. 8A through 8C are conceptual views illustrating a first operation example of a mobile terminal according to FIG. 7;
FIGS. 9 and 10 are flow charts for explaining a mobile terminal system according to still another embodiment of the present disclosure;
FIGS. 11A through 11D are conceptual views illustrating a first operation example of a mobile terminal according to FIGS. 9 and 10;
FIGS. 12A through 12D are conceptual views illustrating a second operation example of a mobile terminal according to FIGS. 9 and 10;
FIGS. 13A and 13B are conceptual views illustrating a third operation example of a mobile terminal according to FIGS. 9 and 10;
FIG. 14 is a flow chart for explaining a mobile terminal according to another embodiment of the present disclosure;
FIGS. 15A and 15B are flow charts for explaining a mobile terminal system according to still another embodiment of the present disclosure;
FIGS. 16A through 16C are conceptual views illustrating a first operation example of a mobile terminal according to FIGS. 15A and 15B;
FIGS. 17A through 17C are conceptual views illustrating a second operation example of a mobile terminal according to FIGS. 15A and 15B;
FIG. 18 is a flow chart for explaining a mobile terminal system according to yet still another embodiment of the present disclosure;
FIGS. 19A and 19B are conceptual views illustrating a first operation example of a mobile terminal according to FIG. 18;
FIG. 20 is a conceptual view illustrating a second operation example of a mobile terminal according to FIG. 18;
FIGS. 21A and 21B are conceptual views illustrating a third operation example of a mobile terminal according to FIG. 18; and
FIGS. 22A and 22B are conceptual views illustrating a fourth operation example of a mobile terminal according to FIG. 18.

### DETAILED DESCRIPTION OF THE INVENTION

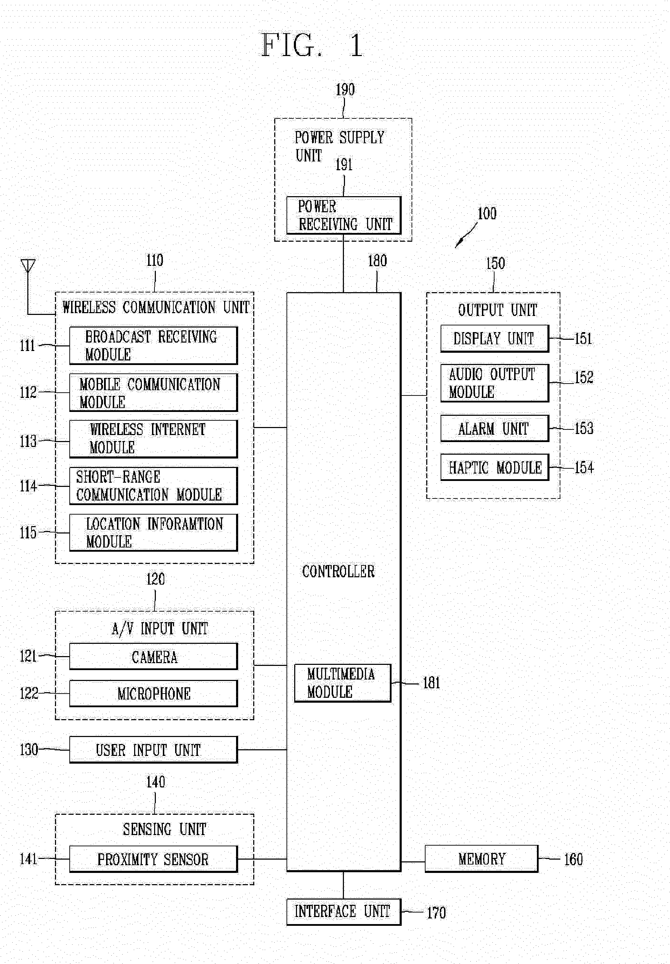

FIG. 1 is a block diagram illustrating a mobile terminal 100 associated with the present invention. Referring to FIG. 1, the mobile terminal 100 may include a wireless communication unit 110, an audio/video (A/V) input unit 120, a user input unit 130, a sensing unit 140, an output unit 150, a memory 160, an interface unit 170, a controller 180, a power supply unit 190, and the like. However, the constituent elements as illustrated in FIG. 1 are not necessarily required, and the mobile communication terminal may be implemented with greater or less number of elements than those illustrated elements.

Hereinafter, the constituent elements 110-190 of the mobile terminal 100 will be described in sequence.

The wireless communication unit 110 may include one or more elements allowing radio communication between the mobile terminal 100 and a wireless communication system, or allowing radio communication between the mobile terminal 100 and a network in which the mobile terminal 100 is located. For example, the wireless communication unit 110 may include a broadcast receiving module 111, a mobile communication module 112, a wireless Internet module 113, a short-range communication module 114, a location information module 115, and the like.

The broadcast receiving module 111 receives broadcast signals and/or broadcast associated information from an external broadcast management server through a broadcast channel. The broadcast associated information may mean information regarding a broadcast channel, a broadcast program, a broadcast service provider, and the like. The broadcast associated information may also be provided through a mobile communication network. In this case, the broadcast associated information may be received by the mobile communication module 112. The broadcast signal and broadcast-associated information received through the broadcast receiving module 111 may be stored in the memory 160.

The mobile communication module 112 transmits and/or receives a radio signal to and/or from at least one of a base station, an external terminal and a server over a mobile communication network. The radio signal may include a voice call signal, a video call signal or various types of data according to text and/or multimedia message transmission and reception.

The wireless Internet module 113 as a module for supporting wireless Internet access may be built-in or externally installed to the mobile terminal 100. A variety of wireless Internet access techniques may be used, such as WLAN (Wireless LAN), Wi-Fi, Wibro (Wireless Broadband), Wimax (World Interoperability for Microwave Access), HSDPA (High Speed Downlink Packet Access), and the like.

The short-range communication module 114 refers to a module for supporting a short-range communication. A variety of short-range communication technologies may be used, such as Bluetooth, Radio Frequency IDentification (RFID), Infrared Data Association (IrDA), Ultra WideBand (UWB), ZigBee, and the like.

The location information module 115 is a module for acquiring a location of the mobile terminal 100, and there is a GPS module as a representative example.

Subsequently, referring to FIG. 1, the A/V(audio/video) input unit 120 receives an audio or video signal, and the A/V (audio/video) input unit 120 may include a camera 121, a microphone 122, and the like. The camera 121 processes an image frame, such as still or moving images, obtained by an image sensor in a video phone call or image capturing mode. The processed image frame may be displayed on a display unit 151. The image frames processed by the camera 121 may be stored in the memory 160 or transmitted to an external device through the wireless communication unit 110. Two or more cameras 121 may be provided according to the use environment of the mobile terminal.

The microphone 122 receives an external audio signal through a microphone in a phone call mode, a recording mode, a voice recognition mode, and the like, and processes the audio signal into electrical voice data. The processed voice data may be converted and outputted into a format that is transmittable to a mobile communication base station through the mobile communication module 112 in the phone call mode. The microphone 122 may implement various types of noise canceling algorithms to cancel noise generated during the process of receiving the external audio signal.

The user input unit 130 may generate input data to control an operation of the mobile terminal 100. The user input unit 130 may be configured with a keypad, a dome switch, a touch pad (pressure/capacitance), a jog wheel, a jog switch, and the like.

The sensing unit 140 detects presence or absence of the user's contact, and a current status of the mobile terminal 100 such as an opened or closed configuration, a location of the mobile terminal 100, an orientation of the mobile terminal 100, an acceleration or deceleration of the mobile terminal 100, and the like, and generates a sensing signal for controlling the operation of the mobile terminal 100. For example, when the mobile terminal 100 is a slide phone type, the sensing unit 140 may sense an opened or closed configuration of the slide phone. Furthermore, the sensing unit 140 may sense whether or not power is supplied from the power supply unit 190, or whether or not an external device is coupled to the interface unit 170.

The sensing unit 140 may include a proximity sensor 141. Furthermore, the sensing unit 140 may include a touch sensor (not shown) for sensing a touch operation with respect to the display unit 151.

The touch sensor may be implemented as a touch film, a touch sheet, a touch pad, and the like. The touch sensor may be configured to convert changes of a pressure applied to a specific part of the display unit 151, or a capacitance generated from a specific part of the display unit 151, into electric input signals. The touch sensor may be configured to sense not only a touched position and a touched area, but also a touch pressure.

When the touch sensor and display unit 151 forms an interlayer structure, the display unit 151 may be used as an input device rather than an output device. The display unit 151 may be referred to as a "touch screen".

When there is a touch input through the touch screen, the corresponding signals may be transmitted to a touch controller (not shown). The touch controller processes signals transferred from the touch sensor, and then transmits data corresponding to the processed signals to the controller 180. Accordingly, the controller 180 may sense which region of the display unit 151 has been touched.

When the touch screen is a capacitance type, the proximity of a sensing object may be detected by changes of an electromagnetic field according to the proximity of a sensing object. The touch screen may be categorized into a proximity sensor 141.

The proximity sensor 141 refers to a sensor for detecting the presence or absence of a sensing object using an electromagnetic field or infrared rays without a mechanical contact. The proximity sensor 141 has a longer lifespan and more enhanced utility than a contact sensor. The proximity sensor 141 may include an optical transmission type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like.

Hereinafter, for the sake of convenience of brief explanation, a behavior of closely approaching the touch screen without contact will be referred to as "proximity touch", whereas a behavior that the pointer substantially comes in contact with the touch screen will be referred to as "contact touch".

The proximity sensor 141 senses proximity touch, and proximity touch patterns (e.g., distance, direction, speed, time, position, moving status, etc.). Information relating to the sensed proximity touch and the sensed proximity touch patterns may be output onto the touch screen.

The output unit 150 may generate an output related to visual, auditory, tactile senses. The output unit 150 may include a display unit 151, an audio output module 153, an alarm unit 154, a haptic module 155, and the like.

The display unit 151 may display (output) information processed in the mobile terminal 100. For example, when the mobile terminal 100 is operated in a phone call mode, the display unit 151 may display a user interface (UI) or graphic user interface (GUI) related to a phone call. When the mobile terminal 100 is operated in a video call mode or image capturing mode, the display unit 151 may display a captured image, a received image, UI, GUI, or the like.

The display unit 151 may include at least one of a liquid crystal display (LCD), a thin film transistor-liquid crystal display (TFT-LCD), an organic light emitting diode (OLED) display, a flexible display, a 3-dimensional (3D) display, and an e-ink display.

At least one of those displays (or display devices) included in the display unit 151 may be configured with a transparent or optical transparent type to allow the user to view the outside therethrough. It may be referred to as a transparent display. A representative example of the transparent display may be a transparent OLED (TOLED), and the like. Under this configuration, the user can view an object positioned at a rear side of the mobile device body through a region occupied by the display unit 151 of the mobile device body.

There may exist two or more display units 151 according to the implementation of the mobile terminal 100. For example, a plurality of the display units 151 may be placed on one surface in a separate or integrated manner, or may be place on different surfaces, respectively.

The audio output module 153 may output audio data received from the wireless communication unit 110 or stored in the memory 160, in a call-receiving mode, a call-placing mode, a recording mode, a voice selection mode, a broadcast reception mode, and the like. The audio output module 153 may output an audio signal related to a function carried out in the mobile terminal 100 (for example, sound alarming a call received or a message received, and the like). The audio output module 152 may include a receiver, a speaker, a buzzer, and the like.

The alarm unit 154 outputs signals notifying the occurrence of an event from the mobile terminal 100. The examples of an event occurring from the mobile terminal 100 may include a call received, a message received, a key signal input, a touch input, and the like. The alarm unit 154 may output not only video or audio signals, but also other types of signals such as signals for notifying the occurrence of an event in a vibration manner. Since the video or audio signals may be also output through the display unit 151 or the audio output unit 153, the display unit 151 and the audio output module 153 may be categorized into part of the alarm unit 154.

The haptic module 155 generates various tactile effects that can be felt by the user. A representative example of the tactile effects generated by the haptic module 155 may include vibration. Vibration generated by the haptic module 155 may have a controllable intensity, a controllable pattern, and the like. For example, different vibrations may be output in a synthesized manner or in a sequential manner.

The haptic module 155 may generate various tactile effects, including not only vibration, but also arrangement of pins vertically moved with respect to a skin surface being touched, air injection force or air suction force through an injection port or suction port, touch by a skin surface, contact with an electrode, effects by stimulus such as an electrostatic force, reproduction of cold or hot feeling using a heat absorbing device or heat emitting device, and the like.

The haptic module 155 may be configured to transmit tactile effects through the user's direct contact, or the user's muscular sense using a finger or a hand. Two or more haptic modules 155 may be provided according to the configuration of the mobile terminal 100.

The memory 160 may store a program for operating the controller 180, or temporarily store input/output data (for example, phonebooks, messages, still images, moving images, and the like). The memory 160 may store data related to various patterns of vibrations and sounds outputted when performing a touch input on the touch screen.

The memory 160 may be implemented using any type of suitable storage medium including a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-only Memory (EEPROM), Programmable Read-only Memory (PROM), magnetic memory, magnetic disk, optical disk, and the like. Also, the mobile terminal 100 may operate a web storage which performs the storage function of the memory 160 on the Internet.

The interface unit 170 may generally be implemented to interface the portable terminal with external devices. The interface unit 170 may allow a data reception from an external device, a power delivery to each component in the mobile terminal 100, or a data transmission from the mobile terminal 100 to an external device. The interface unit 170 may include, for example, wired/wireless headset ports, external charger ports, wired/wireless data ports, memory card ports, ports for coupling devices having an identification module, audio Input/Output (I/O) ports, video I/O ports, earphone ports, and the like.

The identification module may be configured as a chip for storing various information required to authenticate an authority to use the mobile terminal 100, which may include a User Identity Module (UIM), a Subscriber Identity Module (SIM), and the like. Also, the device having the identification module (hereinafter, referred to as "identification device") may be implemented in a type of smart card. Hence, the identification device can be coupled to the mobile terminal 100 via a port.

The interface unit 170 may serve as a path for power to be supplied from an external cradle to the mobile terminal 100 when the mobile terminal 100 is connected to the external cradle or as a path for transferring various command signals inputted from the cradle by a user to the mobile terminal 100. Such various command signals or power inputted from the cradle may operate as signals for recognizing that the mobile terminal 100 has accurately been mounted to the cradle.

The controller 180 typically controls the overall operations of the mobile terminal 100. For example, the controller 180 performs the control and processing related to telephony calls, data communications, video calls, and the like. The controller 180 may include a multimedia module 181 which provides multimedia playback. The multimedia module 181 may be configured as part of the controller 180 or as a separate component. The controller 180 can perform a pattern recognition processing so as to recognize a handwriting or drawing input on the touch screen as text or image.

The power supply unit 190 may receive external or internal power to provide power required by various components under the control of the controller 180.

Various embodiments described herein may be implemented in a computer or similar device readable medium using software, hardware, or any combination thereof.

For hardware implementation, it may be implemented by using at least one of application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and electrical units designed to perform the functions described herein. In some cases, such embodiments may be implemented in the controller 180 itself.

For software implementation, the embodiments such as procedures or functions may be implemented together with separate software modules that allow performing of at least one function or operation. Software codes can be implemented by a software application written in any suitable programming language. The software codes may be stored in the memory 160 and executed by the controller 180.

Hereinafter, the method of processing a user input to the mobile terminal 100 will be described.

The user input unit 130 is manipulated to receive a command for controlling the operation of the mobile terminal 100, and may include a plurality of manipulation units. The manipulation units may be commonly designated as a manipulating portion, and any method may be employed if it is a tactile manner allowing the user to perform manipulation with a tactile feeling.

Various kinds of visual information may be displayed on the display unit 151. The visual information may be displayed in the form of a character, a numeral, a symbol, a graphic, an icon, and the like. For an input of the visual information, at least one of a character, a numeral, a symbol, a graphic, and an icon may be displayed with a predetermined arrangement so as to be implemented in the form of a keypad. Such a keypad may be referred to as a so-called "soft key."

The display unit 151 may operate on an entire region or operate by dividing into a plurality of regions. In case of the latter, the plurality of regions may be configured to operate in an associative way. For example, an output window and an input window may be displayed on the upper and lower portions of the display unit 151, respectively. The output window and the input window may be regions allocated to output or input information, respectively. A soft key on which numerals for inputting a phone number or the like are displayed is outputted on the input window. When the soft key is touched, a numeral corresponding to the touched soft key is displayed on the output window. When the first manipulating unit is manipulated, a phone call connection for the phone number displayed on the output window will be attempted or a text displayed on the output window will be entered to the application.

The display unit 151 or touch pad may be configured to sense a touch scroll. The user may move an object displayed on the display unit 151, for example, a cursor or pointer placed on an icon or the like, by scrolling the display unit 151 or touch pad. Moreover, when a finger is moved on the display unit 151 or touch pad, a path being moved by the finger may be visually displayed on the display unit 151. It may be useful to edit an image displayed on the display unit 151.

In order to cope with a case where the display unit 151 and touch pad are touched together within a predetermined period of time, one function of the terminal 100 may be implemented. For the case of being touched together, there is a case when the user clamps a body of the mobile terminal 100 using his or her thumb and forefinger. For one of the above functions implemented in the mobile terminal 100, for example, there may be an activation or de-activation for the display unit 151 or touch pad.

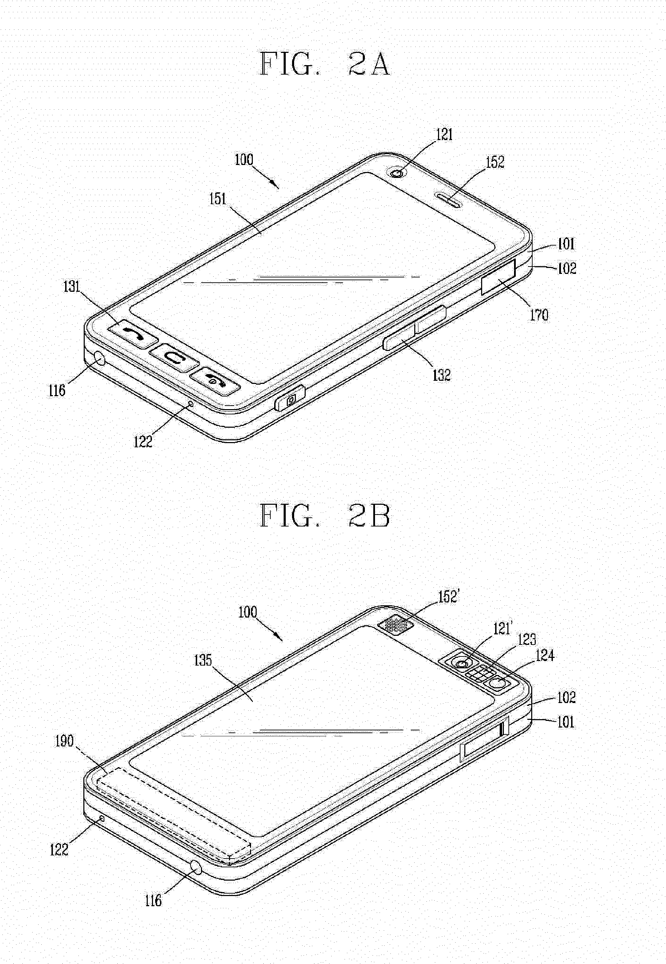

FIGS. 2A and 2B are perspective views illustrating the external appearance of a mobile terminal 100 related to the present disclosure. FIG. 2A is a front and a side view illustrating the mobile terminal 100, and FIG. 2B is a rear and the other side view illustrating the mobile terminal 100.

Referring to FIG. 2A, the mobile terminal 100 disclosed herein is provided with a bar-type terminal body. However, the present invention is not only limited to this type of terminal, but also applicable to various structures of terminals such as slide type, folder type, swivel type, swing type, and the like, in which two and more bodies are combined with each other in a relatively movable manner.

The terminal body includes a case (casing, housing, cover, etc.) forming an appearance of the terminal. In this embodiment, the case may be divided into a front case 101 and a rear case 102. Various electronic components may be integrated in a space formed between the front case 101 and the rear case 102. At least one middle case may be additionally disposed between the front case 101 and the rear case 102.

The cases may be formed by injection-molding a synthetic resin or may be also formed of a metal material such as stainless steel (STS), titanium (Ti), or the like.

A display unit 151, an audio output module 152, a camera 121, a user input unit 130 (refer to FIG. 1), a microphone 122, an interface 170, and the like may be arranged on the terminal body, mainly on the front case 101.

The display unit 151 occupies a most portion of the front case 101. The audio output unit 152 and the camera 121 are disposed on a region adjacent to one of both ends of the display unit 151, and the user input unit 131 and the microphone 122 are disposed on a region adjacent to the other end thereof. The user interface 132 and the interface 170, and the like, may be disposed on a lateral surface of the front case 101 and the rear case 102.

The user input unit 130 is manipulated to receive a command for controlling the operation of the portable terminal 100. The user input unit 130 may include a plurality of manipulation units 131, 132.

The first and the second manipulation unit 131, 132 may receive various commands. For example, the first manipulation unit 131 may be used to receive a command, such as start, end, scroll, or the like. The second manipulation unit 132 may be used to receive a command, such as controlling a volume level being outputted from the audio output unit 152, or switching it into a touch recognition mode of the display unit 151.

Referring to FIG. 2B, a camera 121' may be additionally mounted on a rear surface of the terminal body, namely, the rear case 102. The rear camera 121' has an image capturing direction, which is substantially opposite to the direction of the front camera 121 (refer to FIG. 2A), and may have different number of pixels from those of the front camera 121.

For example, that the front camera 121 may be configured to have a relatively small number of pixels, and the rear camera 121' may be configured to have a relatively large number of pixels. Accordingly, in case where the front camera 121 is used for video communication, it may be possible to reduce the size of transmission data when the user captures his or her own face and sends it to the other party in real time. On the other hand, the rear camera 121' may be used for the purpose of storing high quality images.

On the other hand, the cameras 121, 121' may be provided in the terminal body in a rotatable and popupable manner.

Furthermore, a flash 123 and a mirror 124 may be additionally disposed adjacent to the rear camera 121'. The flash 123 illuminates light toward an object when capturing the object with the camera 121'. The mirror 124 allows the user to look at his or her own face, or the like, in a reflected way when capturing himself or herself (in a self-portrait mode) by using the rear camera 121'.

Furthermore, a rear audio output unit 152' may be additionally disposed on a rear surface of the terminal body. The rear audio output unit 152' together with the front audio output unit 152 (refer to FIG. 2A) can implement a stereo function, and it may be also used to implement a speaker phone mode during a phone call.

Furthermore, an antenna 116 for receiving broadcast signals may be additionally disposed on a lateral surface of the terminal body. The antenna 116 constituting part of a broadcast receiving module 111 (refer to FIG. 1) may be provided so as to be pulled out from the terminal body.

Furthermore, a power supply unit 190 for supplying power to the portable terminal 100 may be mounted on the terminal body. The power supply unit 190 may be configured so as to be incorporated in the terminal body, or directly detachable from the outside of the terminal body.

A touch pad 135 for detecting a touch may be additionally mounted on the rear case 102. The touch pad 135 may be also configured with an optical transmission type, similarly to the display unit 151 (refer to FIG. 2A). Alternatively, a rear display unit for displaying visual information may be additionally mounted on the touch pad 135. At this time, information displayed on the both surfaces of the front display unit 151 and rear display unit may be controlled by the touch pad 135.

The touch pad 135 may be operated in conjunction with the display unit 151 of the front case 101. The touch pad 135 may be disposed in parallel at a rear side of the display unit 151. The touch pad 135 may have the same size as or a smaller size than the display unit 151.

As the mobile terminal 100 becomes highly functional, the battery consumption of the mobile terminal 100 has been rapidly increased. However, the user wants to not only have the mobile terminal 100 with high performance but also use the mobile terminal 100 for longer period of time. Accordingly, studies on wireless charging technologies have been continuously carried out to satisfy the user's requirement.

Owing to the studies, from the standpoint of a business provided with a wireless charging pad, a method of providing power for the wireless charging of the mobile terminal 100 with free of charge as well as creating profit has been considered. Furthermore, from the standpoint of the user, a method for charging the mobile terminal 100 in a wireless manner with free of charge has been taken into consideration.

Accordingly, hereinafter, a mobile terminal 100 capable of enhancing the convenience of a provider who provides advertisement content in charging a battery of the mobile terminal 100 in a wireless manner and a control method thereof will be described with reference to the accompanying drawings.

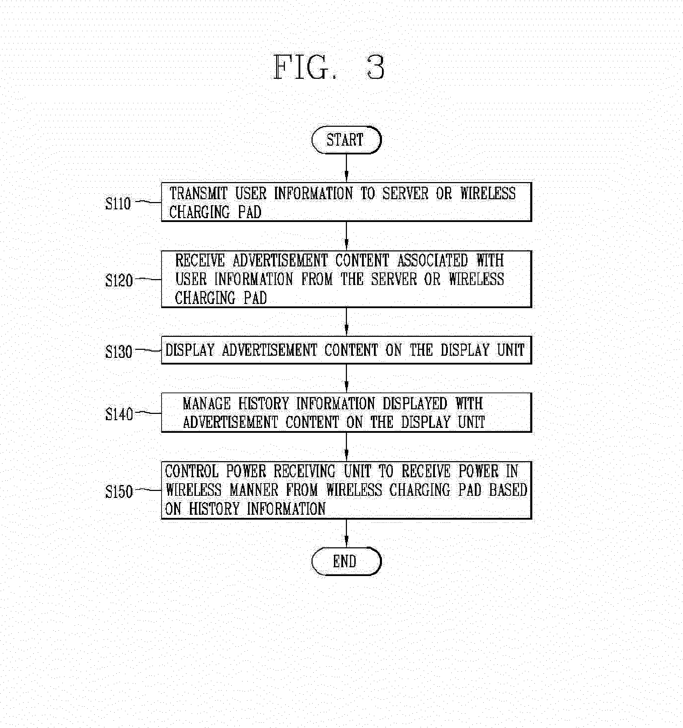

FIG. 3 is a flow chart for explaining the mobile terminal 100 (refer to FIG. 1) according to an embodiment of the present disclosure. The mobile terminal 100 may include a wireless communication unit 110 (refer to FIG. 1), a display unit 151 (refer to FIG. 1), a controller 180 (refer to FIG. 1), and a power receiving unit 191 (refer to FIG. 1).

Referring to FIG. 3, first, the process (S110) of transmitting user information to a server and wireless charging pad and the process (S120) of receiving advertisement content associated with the user information from the server or wireless charging pad are carried out.

According to the embodiments of the present disclosure, visual information may be displayed in a region where the user interface is displayed on the display unit 251 in the form of a text message or graphic message. Furthermore, a popup window including visual information may be displayed on the display unit 251.

The mobile terminal 100 may recognize the ID of a wireless charging pad to distinguish a commercial mode for receiving advertisement content from a home mode. Hereinafter, when the wireless charging pad is a commercial pad, the embodiments of the present disclosure will be applicable.

The wireless charging pad may initially sense the mobile terminal 100. The wireless charging pad may perform an analog ping process and a digital ping process. More specifically, during the analog ping process, a current value flowing the coil of the wireless charging pad may be changed, and thus the wireless charging pad can sense that the mobile terminal 100 exists on the wireless charging pad. Then, the wireless charging pad may transmit minimum power to the mobile terminal 100 to start communication with the mobile terminal 100 during the digital ping process. Upon receiving power from the wireless charging pad, the mobile terminal 100 can sense the wireless charging pad. At this time, the wireless charging pad may request user information to the mobile terminal 100, and the mobile terminal 100 may transmit user information to the wireless charging pad.

On the contrary, the mobile terminal 100 may initially sense the wireless charging pad. The mobile terminal 100 may receive the ID of the wireless charging pad through wireless communication to sense the wireless charging pad. At this time, the mobile terminal 100 may immediately transmit user information to the wireless charging pad.

The wireless communication unit 110 may transmit user information to the server or wireless charging pad. Specifically, the wireless communication unit 110 may transmit the ID of the mobile terminal 100 to the server or wireless charging pad using a reserved packet of the identification & configuration packet according to the Wireless Power Consortium (WPC) communication standard.

On the other hand, the wireless communication unit 110 may transmit at least one of the user's age, gender, occupation, address and interest information in addition to the ID of the mobile terminal 100 as the user information.

At this time, the wireless communication unit 110 may perform wireless communication with the wireless charging pad using at least one of Near Field Communication (NFC), Bluetooth communication, infrared communication and Zigbee communication. Furthermore, the wireless communication unit 110 may perform wireless communication with the server using at least one of Wi-Fi, 3G network and 4G network.

Then, the process (S130) of displaying advertisement content on the display unit 151 is carried out.

The content provider may select content associated with user information using the user information. At this time, the user information may include the ID of the mobile terminal 100 as described above, and also may include at least one of the user's age, gender, occupation, address and interest information in addition to the ID.

The mobile terminal 100 may receive advertisement content from the content provider. Specifically, the mobile terminal 100 may download advertisement content through the server or wireless charging pad from the content provider to store it in the memory 160 (refer to FIG. 1). Furthermore, the mobile terminal 100 may receive the address of a website on which advertisement content can be viewed. Meanwhile, the downloaded advertisement content may be in the form of a digital rights management (DRM) file, and can be managed by the content provider even after being stored in the memory 160 of the mobile terminal 100.

The advertisement content may be immediately displayed on the display unit 151 or otherwise may be stored in the memory 160 and then displayed on the display unit 151 by the user's selection.

Next, the process (S140) of managing history information displayed with the advertisement content on the display unit 151 is carried out.

Specifically, the controller 180 may manage history information including a time point of displaying the advertisement content, a time of displaying the same, and a number of displaying the same on the display unit 151. Here, wireless charging may be accepted or rejected according to whether or not the history information satisfies a specified power receiving condition. To this end, the history information may be transmitted to the server or wireless charging pad through the wireless communication unit 110.

Specifically, the mobile terminal 100 may receive service guide information from the server or wireless charging pad to configure power receiving condition information. The controller 180 may display the receive service guide information on the display unit 151, and configure power receiving condition information based on the user's selection of the displayed service guide information.

The service guide information may include at least one of an amount of power to be received in a wireless manner from the wireless charging pad, a time point of displaying the advertisement content based on the power receiving time point, a number of displaying the advertisement content, and a time of displaying the advertisement content.

Subsequently, the process (S150) of controlling the power receiving unit 191 to receive power in a wireless manner from the wireless charging pad based on the history information is carried out.

The power receiving unit 191 may be configured to receive power (wireless power) transferred in a wireless manner from the wireless charging pad. At this time, wireless power may be transferred using a wireless power transfer method such as an inductive coupling method, a resonant coupling method, their mixture method, or the like.

The power receiving unit 191 may include constituent elements required to receive wireless power according to the foregoing wireless power transfer method. For example, the power receiving unit 191 may include a coil for receiving wireless power in the form of a magnetic or electromagnetic field having a resonant characteristic.

Specifically, the power receiving unit 191 may include a secondary coil for inducing a current by means of a changing magnetic field as a constituent element based on an inductive coupling method. Furthermore, the power receiving unit 191 may include a coil and a resonant circuit for generating a resonant phenomenon by means of an electromagnetic field having a specific resonant frequency as a constituent element based on a resonant coupling method.

The power receiving unit 191 may charge a battery using power supplied or transferred from the wireless charging pad. At this time, the power receiving unit 191 may control a charging voltage, a charging current, a charging speed, and the like.

The controller 180 may determine whether or not to receive power from the wireless charging pad using the history information and power receiving condition information displayed with the advertisement content. In other words, the controller 180 may control the power receiving unit 191 to receive power in a wireless manner from the wireless charging pad when the history information satisfies the power receiving condition.

On the other hand, the controller 180 may display a popup window indicating that the power receiving condition is not satisfied on the display unit when the history information does not satisfies the power receiving condition. At this time, the controller 180 may also adjust an amount of power to be received in a wireless manner by the power receiving unit 191 from the wireless charging pad based on the history information.

On the other hand, the controller may transmit the history information and power receiving condition information to the server or wireless charging pad, and at this time, whether or not the history information satisfies the power receiving condition may be determined in the server or wireless charging pad, and accordingly, the mobile terminal 100 may receive any one of a wireless charging accept message and a wireless charging reject message from the server or the wireless charging pad.

As described above, according to the present disclosure, the wireless charging of the mobile terminal 100 may be carried out when the advertisement content viewing condition is satisfied, and thus a business provided with the wireless charging pad may provide power for wireless charging with free of charge to the user while creating profit.

Furthermore, according to the present disclosure, an advertisement content viewing condition accompanied by the wireless charging of the mobile terminal 100 may be selected by the user, thereby adjusting an amount of power to be charged during wireless charging. Accordingly, public power resources can be effectively used.

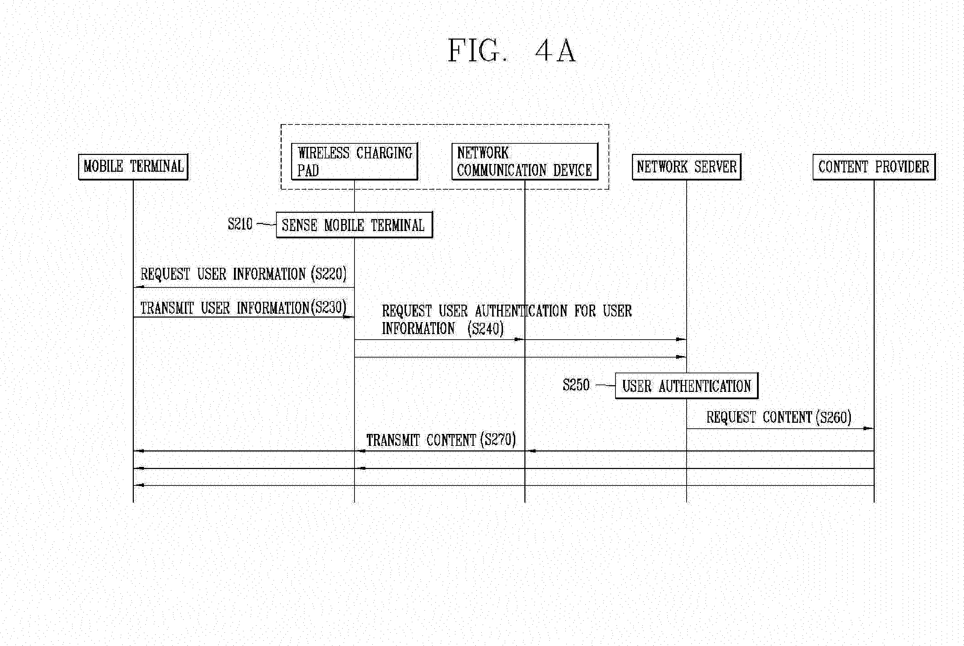

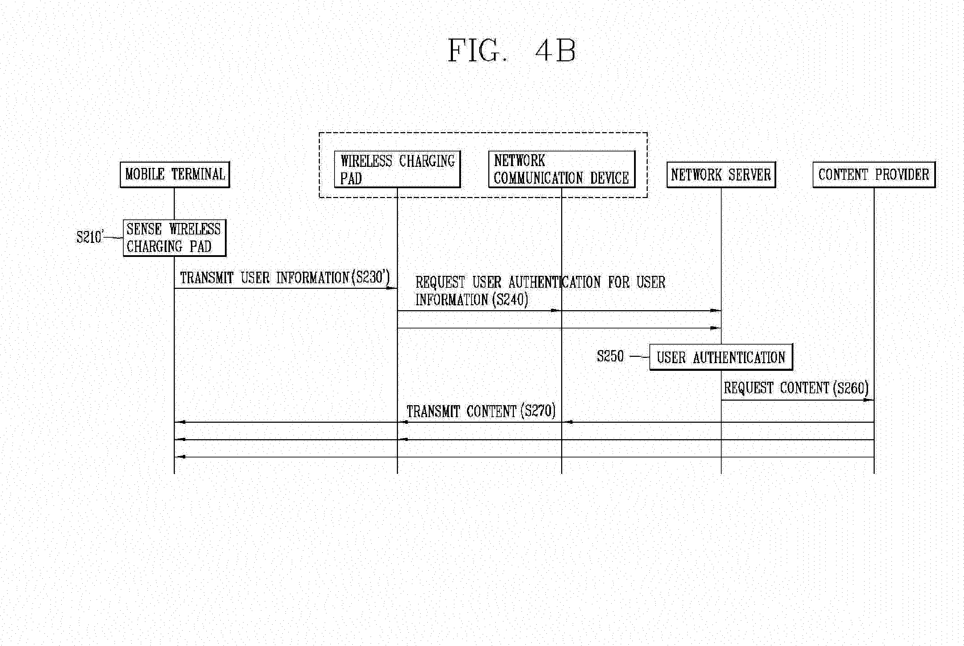

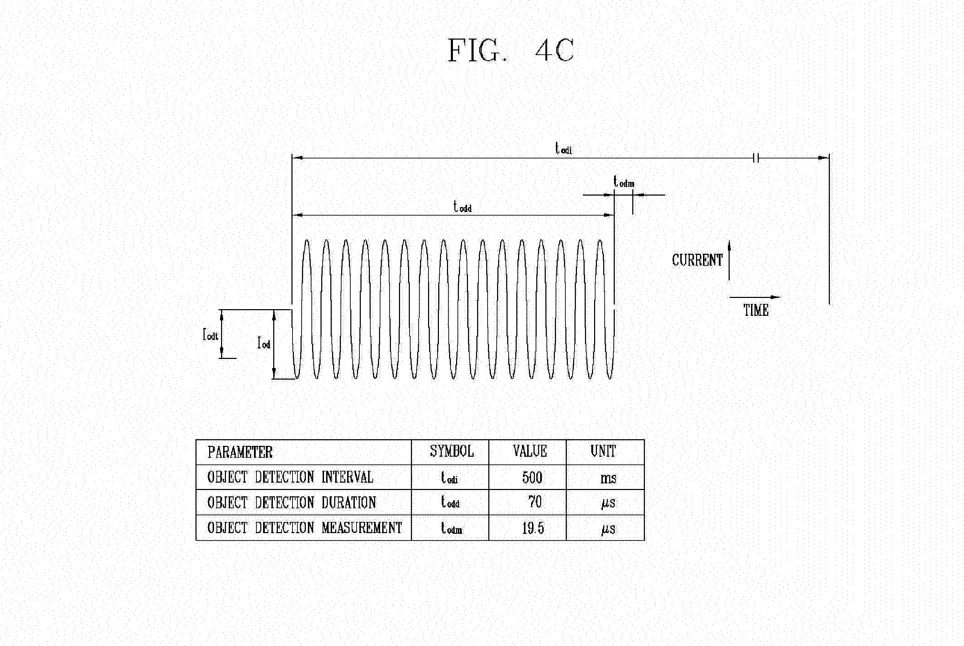

FIGS. 4A and 4B are flow charts for explaining a mobile terminal system according to an embodiment of the present disclosure. FIG. 4C is a conceptual view for explaining an embodiment in which a wireless charging pad according to the present disclosure performs an analog ping process.

The mobile terminal system may include a mobile terminal 100 (refer to FIG. 1), a wireless charging pad, a network communication device, a network server, and a content provider.

Here, the wireless charging pad can perform communication with a network server. The wireless charging pad may be directly or indirectly connected to a device (hereinafter, referred to as a "network communication device") having a communication function to communicate with the network server. In other words, the wireless charging pad may be logically combined with or logically separated from, or otherwise physically combined with or physically separated from the network communication device.

Referring to FIG. 4A, first, the process (S210) of allowing the wireless charging pad to sense the mobile terminal 100 is carried out.

Specifically, the wireless charging pad may sense the mobile terminal 100 based on a change of current flowing a coil. The wireless charging pad may perform an analog ping process and a digital ping process to sense that the mobile terminal 100 is located on the wireless charging pad.

Here, analog ping process denotes a process in which when a short pulse of the response frequency is periodically transmitted from the transmitter to the Tx coil, a current flowing the coil is varied according to a device existing on the wireless charging pad to recognize the device existing on the wireless charging pad. In other words, the response frequency is shifted when a device exists on the wireless charging pad, and thus a relatively small current flows through the coil. At this time, when a value of the current flowing the coil is less than a threshold value, the transmitter may sense that the device exists on the wireless charging pad.

Furthermore, digital ping process denotes a process of sending substantially minimum power to the device to start communication with the device after the transmitter senses that the device exists on the wireless charging pad during the analog ping process. At this time, when a first packet is not received for a predetermined period of time to start communication, the digital ping process is terminated, and returned to the analog ping process again.

Next, the process (S220) of allowing the wireless charging pad to request user information to the mobile terminal 100 and the process (S230) of allowing the mobile terminal 100 to transmit user information to the wireless charging pad are carried out.

Specifically, the mobile terminal 100 may transmit the ID of the mobile terminal 100 to the server or wireless charging pad using a reserved packet of the identification & configuration packet according to the Wireless Power Consortium (WPC) communication standard.

On the contrary, referring to FIG. 4B, first, the process (S21 0') of allowing the mobile terminal 100 to sense the wireless charging pad is carried out. The mobile terminal 100 may receive the ID of the wireless charging pad through wireless communication to sense the wireless charging pad. At this time, the mobile terminal 100 may immediately transmit user information to the wireless charging pad. Next, the process (S230') of allowing the mobile terminal 100 to transmit user information to the wireless charging pad is carried out.

Then, referring to FIGS. 4A and 4B, the process (S240) of allowing the wireless charging pad to request user authentication for the user information to a network server is carried out.

Specifically, the wireless charging pad may request user authentication to a network server through a network communication device or otherwise immediately request user authentication to the network server.

Next, the process (S250) of performing user authentication in the network server is carried out. The network server may perform user authentication using the received user information and information stored in server.

Then, the process (S260) of allowing the network server to request advertisement content to the content provider is carried out.

Specifically, the network server may perform user authentication, and then immediately transmit user information to the content provider. At this time, the user information may include at least one of the user's age, gender, occupation, address and interest information on the mobile terminal 100. In this case, the content provider may select advertisement content to be transmitted to the mobile terminal 100 using the received user information.

On the other hand, the network server may perform user authentication, and then select advertisement content to be transmitted to the mobile terminal 100 using user information, and transmit information associated with the selected advertisement content to the content provider to transmit the selected advertisement content.

Next, the process (S270) of allowing the content provider to transmit advertisement content to the mobile terminal 100 is carried out.

Specifically, the content provider may transmit advertisement content to the wireless charging pad through a network communication device or otherwise immediately transmit advertisement content to the wireless charging pad, and the wireless charging pad may transmit advertisement content to the mobile terminal 100. Furthermore, the content provider may immediately transmit advertisement content to the mobile terminal 100.

Though not shown in the drawing, there may be a plurality of advertisement contents. In other words, the content provider may select a plurality of advertisement contents using user information, and transmit the plurality of advertisement contents to the mobile terminal 100.

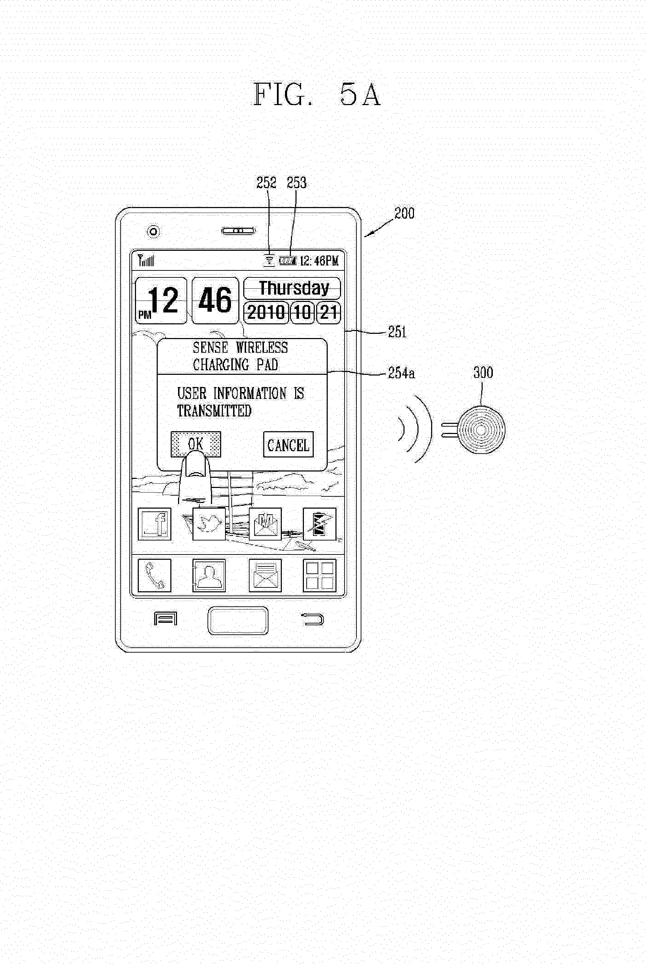

FIGS. 5A through 5D are conceptual views illustrating a first operation example of a mobile terminal according to FIG. 4. Specifically, FIGS. 5A through 5D are conceptual views illustrating an example in which the mobile terminal 200 transmits user information to the outside and receives advertisement content from the outside.

The mobile terminal 200 may include a wireless communication unit 110 (refer to FIG. 1), a display unit 251 (refer to FIG. 1), a controller 180 (refer to FIG. 1), and a power receiving unit 191 (refer to FIG. 1).

The mobile terminal 200 may be disposed adjacent to the wireless charging pad 300. The wireless charging pad 300 can perform communication with a network server. Though not shown in the drawing, the wireless charging pad 300 may be directly or indirectly connected to a network communication device having a communication function to perform communication with the network server.

In addition, the mobile terminal 200 may perform communication with a network server using at least one of Wi-Fi, 3G network and 4G network. Accordingly, an icon 252 indicating that the mobile terminal 200 is performing communication with a network server may be displayed on the display unit 251.

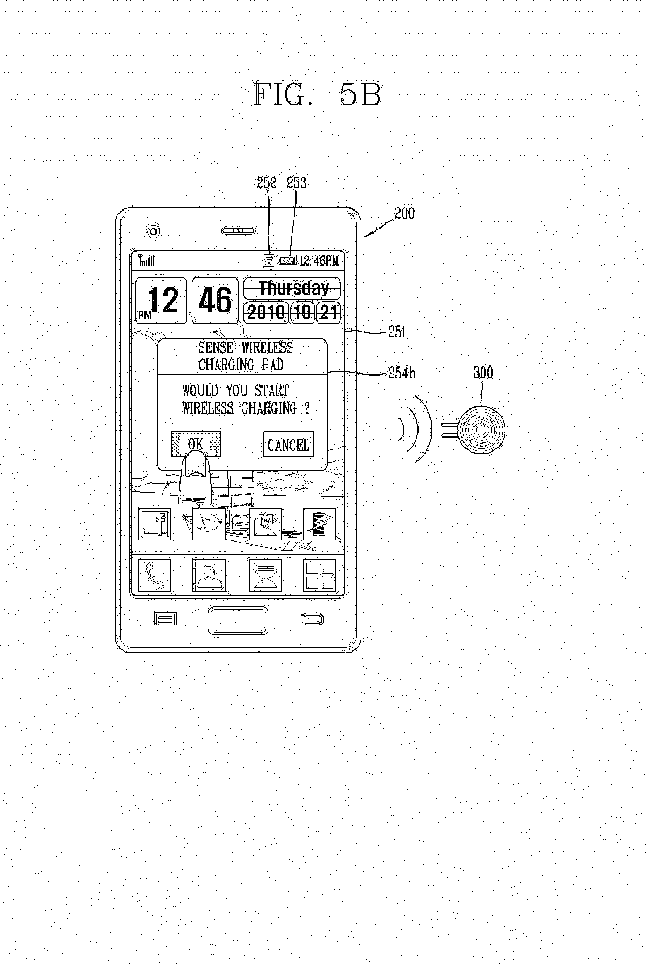

Referring to FIGS. 5A and 5B, first, the wireless charging pad 300 may sense a current flowing through the coil, and the mobile terminal 200 may also sense the wireless charging pad 300 by receiving minimum power from the wireless charging pad 300. On the other hand, the mobile terminal 200 and wireless charging pad 300 may sense each other using at least one of Near Field Communication (NFC), Bluetooth communication, infrared communication and Zigbee communication.

When the wireless charging pad 300 is sensed, the mobile terminal 200 may transmit user information to the server or wireless charging pad 300. At this time, as illustrated in FIG. 5A, a message 254a indicating that user information is transmitted may be displayed on the display unit 251. Here, the user information may include the user's ID, and may also include the user's age, gender, occupation, address and interest information.

The user may select whether or not the user information has been transmitted by displaying a message 254a indicating that user information is transmitted on the display unit 251. On the other hand, though not shown in the drawing, subsequent to transmitting the user information, a message indicating that the user information has been transmitted may be displayed on the display unit 251.

Furthermore, as illustrated in FIG. 5B, a message 254b for selecting whether or not to start wireless charging may be displayed on the display unit 251. Accordingly, the user may select whether or not to start wireless charging.

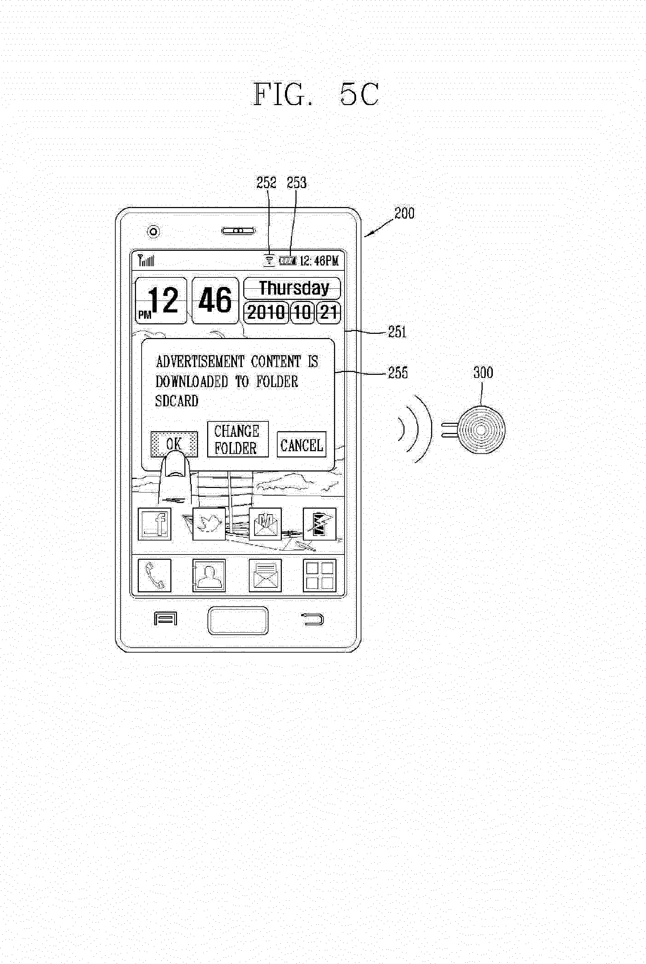

Next, Referring to FIG. 5C, the mobile terminal 200 may receive advertisement content from the server or wireless charging pad 300. At this time, as illustrated in the drawing, a message 255 indicating that advertisement content is being received may be displayed on the display unit 251. Here, the advertisement content may be associated with the user information, but may not be necessarily limited to this. On the other hand, though not shown in the drawing, the mobile terminal 200 may receive a message including the address of a website on which advertisement content can be viewed.

On the other hand, though not shown in the drawing, there may be a plurality of advertisement contents. In other words, the mobile terminal 200 may receive a plurality of advertisement contents from the server or wireless charging pad 300. At this time, a list of the plurality of advertisement contents may be displayed on the display unit 251, and the user may select at least one of them.

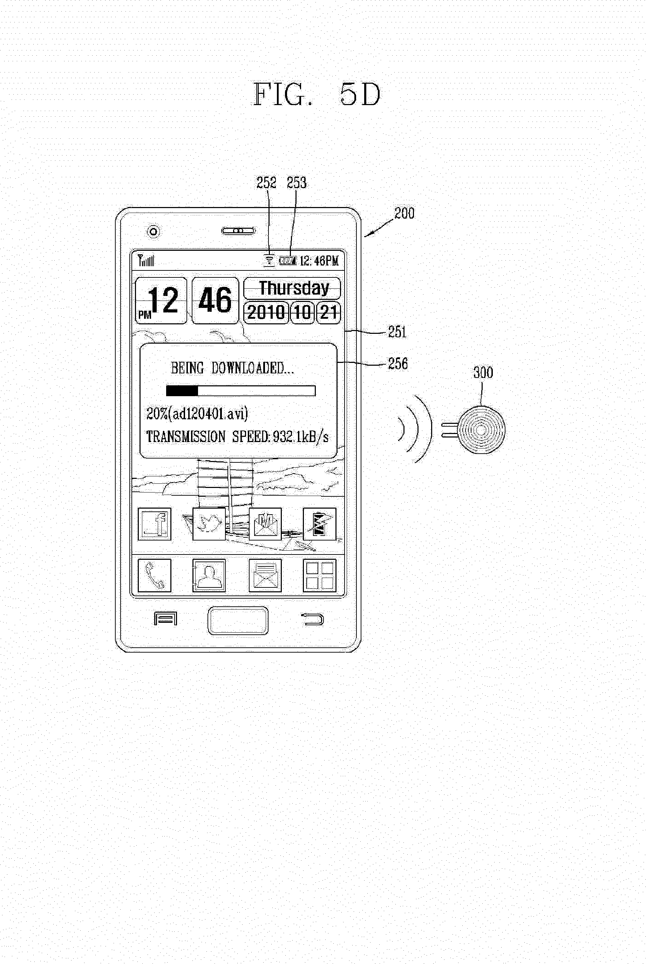

Then, referring to FIG. 5D, the mobile terminal 200 may download advertisement content to a preset folder.

At this time, the user may change a folder to which the advertisement content is downloaded. In this case, the mobile terminal 200 can download advertisement content to the changed folder.

At this time, as illustrated in the drawing, a message 256 indicating that advertisement content is being downloaded may be displayed on the display unit 251. The message 256 may include a progress bar indicating a download progress status.

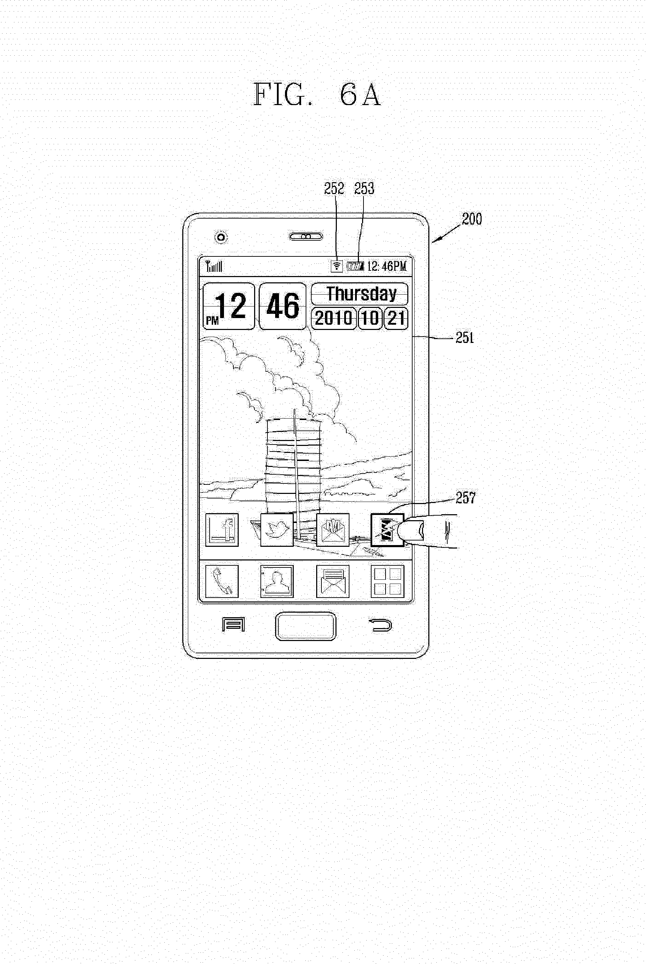

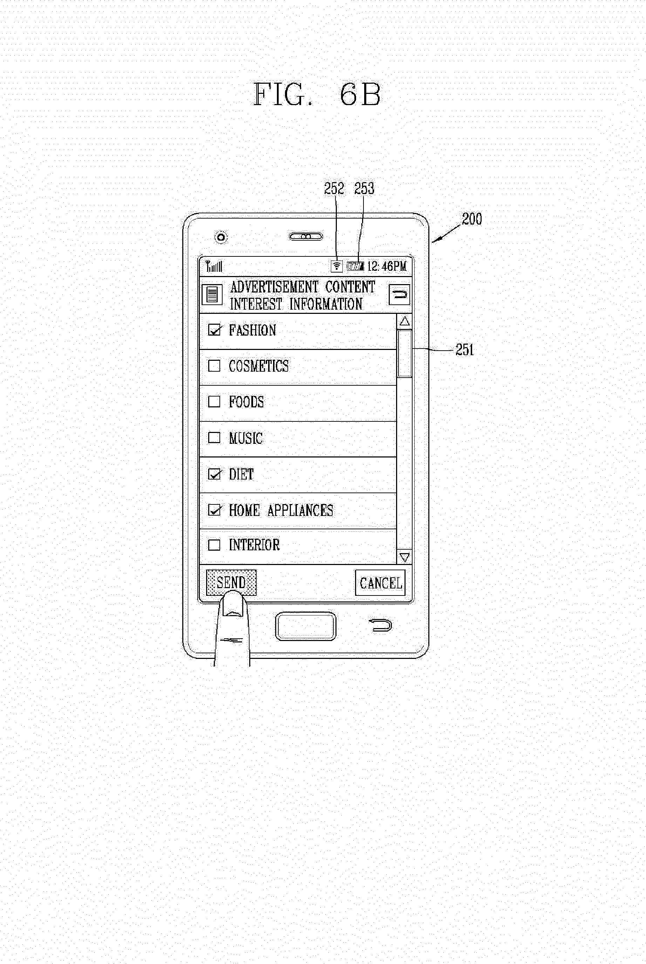

FIGS. 6A and 6B are conceptual views illustrating a second operation example of a mobile terminal according to FIG. 4.

Specifically, FIGS. 6A and 6B are conceptual views illustrating an example of configuring user information to be transmitted to the server or wireless charging pad. The mobile terminal 200 may include a wireless communication unit 110 (refer to FIG. 1), a display unit 251 (refer to FIG. 1), a controller 180 (refer to FIG. 1), and a power receiving unit 191 (refer to FIG. 1).

Referring to FIG. 6A, an icon 257 associated with wireless charging may be displayed on the display unit 251. When a touch input onto the icon 257 is sensed, the controller 180 may receive a control command for configuring or changing user information. Here, Referring to FIG. 6B, the user information may include interest information on the advertisement content, and may further include the user's age, gender, occupation or address.

On the other hand, when the mobile terminal 200 senses a wireless charging pad even though there is no touch input onto the icon 257, a window capable of automatically configuring or changing user information may be displayed on the display unit 251.

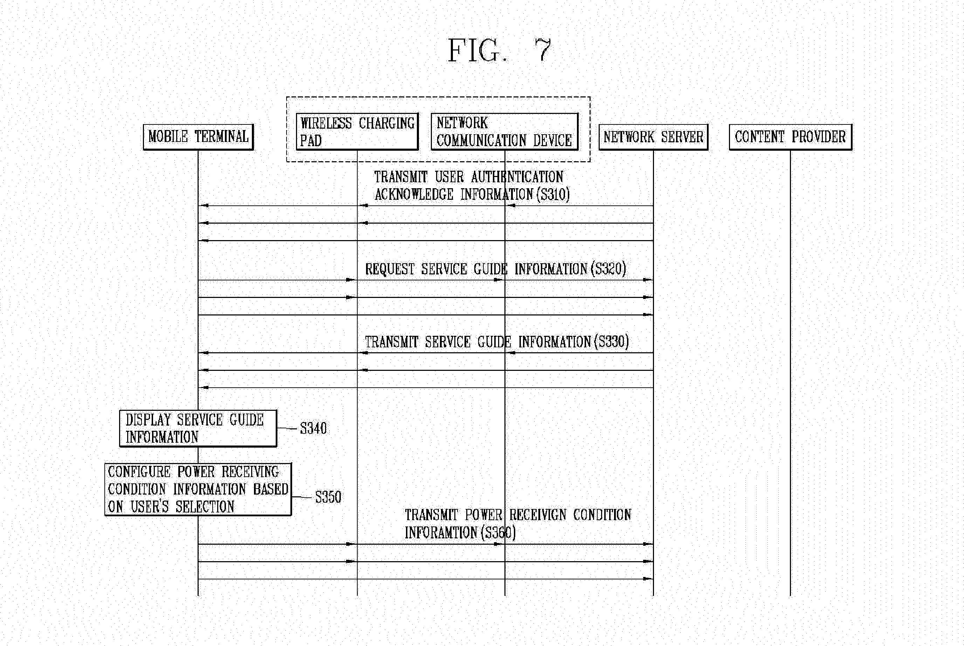

FIG. 7 is a flow chart for explaining a mobile terminal system according to another embodiment of the present disclosure.

Specifically, FIG. 7 is a flow chart illustrating an example of configuring power receiving condition information using service guide information. The mobile terminal system may include a mobile terminal 100 (refer to FIG. 1), a wireless charging pad, a network communication device, a network server, and a content provider.

Here, the wireless charging pad can perform communication with a network server. The wireless charging pad may be directly or indirectly connected to a network communication device having a communication function to communicate with the network server.

Referring to FIG. 7, first, the process (S310) of allowing the network server to transmit user authentication acknowledge information to the mobile terminal 100 is carried out.

Specifically, the network server may perform a user authentication process in FIGS. 4A and 4B, and then transmit user authentication acknowledge information to the wireless charging pad through the network communication device or otherwise immediately transmit user authentication acknowledge information to the wireless charging pad, and the wireless charging pad may transmit user authentication acknowledge information to the mobile terminal 100. Furthermore, the network server may immediately transmit user authentication acknowledge information to the mobile terminal 100.

Next, the process (S320) of allowing the mobile terminal 100 to request service guide information to the network server is carried out.

Specifically, the mobile terminal 100 may request service guide information to the wireless charging pad. The wireless charging pad may request service guide information to the network server through the network communication device, or otherwise immediately request service guide information to the network server. Furthermore, the mobile terminal 100 may immediately request service guide information to the network server.

On the other hand, the foregoing process (S310) of allowing the network server to transmit user authentication acknowledge information to the mobile terminal 100 and the foregoing process (S320) of allowing the mobile terminal 100 to request service guide information to the network server may be omitted. For example, when the wireless charging pad senses the mobile terminal 100, the network server may complete user authentication and then immediately transmit service guide information to the mobile terminal 100.

Then, the process (S330) of allowing the network server to transmit service guide information to the mobile terminal is carried out.

Specifically, the network server may transmit service guide information to the wireless charging pad through a network communication device or otherwise immediately transmit service guide information to the wireless charging pad, and the wireless charging pad may transmit service guide information to the mobile terminal 100. Furthermore, the network server may immediately transmit service guide information to the mobile terminal 100.

Here, the service guide information is information for configuring power receiving condition information, including at least one of an amount of power to be received in a wireless manner from the wireless charging pad, a time point of displaying the advertisement content based on the power receiving time point, a number of displaying the advertisement content, and a time of displaying the advertisement content.

Next, the process (S340) of displaying service guide information in the mobile terminal 100 and the process (S350) of configuring power receiving condition information based on the user's selection are carried out.

Specifically, power receiving condition information may be configured based on the user's selection of service guide information displayed on the display unit display unit 151 (refer to FIG. 1) of the mobile terminal 100. On the other hand, prescribed power receiving condition may be also used without using the user's selection.

Then, the process (S360) of allowing the mobile terminal 100 to transmit power receiving condition information to the network server is carried out.

Specifically, the mobile terminal 100 may transmit power receiving condition information to the wireless charging pad. The wireless charging pad may transmit power receiving condition information to the network server through the network communication device or otherwise immediately transmit power receiving condition information to the network server. Furthermore, the mobile terminal 100 may immediately transmit power receiving condition information to the network server.

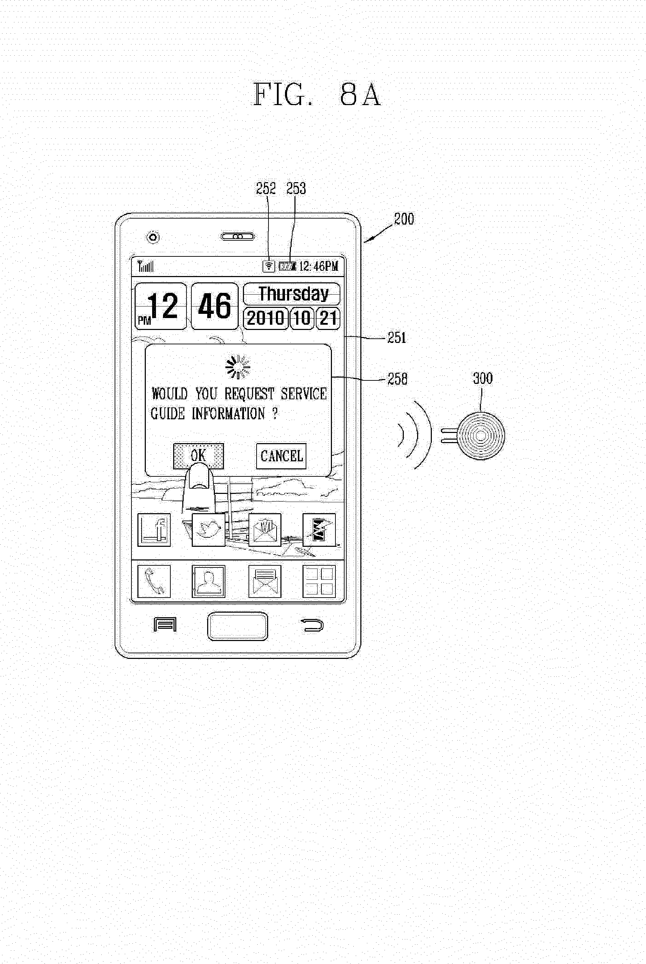

FIGS. 8A through 8C are conceptual views illustrating a first operation example of the mobile terminal 200 according to FIG. 7.

Specifically, FIGS. 8A through 8C are conceptual views illustrating an example of configuring power receiving condition information using service guide information. The mobile terminal 200 may include a wireless communication unit 110 (refer to FIG. 1), a display unit 251 (refer to FIG. 1), a controller 180 (refer to FIG. 1), and a power receiving unit 191 (refer to FIG. 1).

Referring to FIG. 8A, a message 258 for selecting whether or not to request service guide information may be displayed on the display unit 251 of the mobile terminal 200. The user may select whether or not to request service guide information. As illustrated in the drawing, when requesting service guide information, the mobile terminal 200 may receive service guide information from the server or wireless charging pad 300.

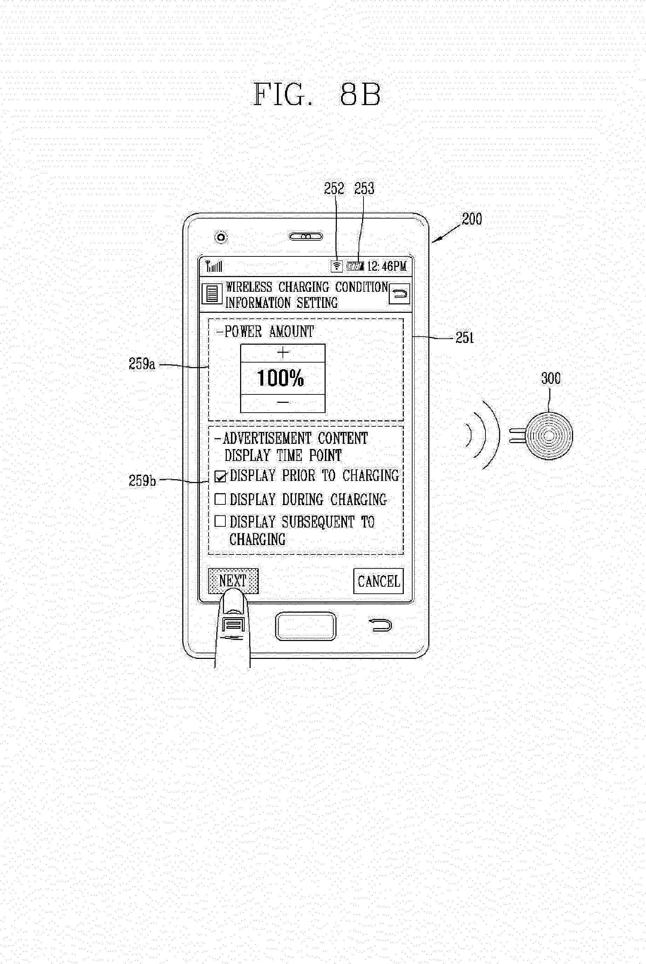

Next, referring to FIG. 8B, service guide information for configuring wireless charging condition information may be displayed on the display unit 251. As illustrated in the drawing, service guide information may include at least one of power amount information 259a to be received in a wireless manner from the wireless charging pad 300 and advertisement content display time point information 259b based on the power receiving time point.

Though the power amount information 259a and advertisement content display time point information 259b are displayed at the same time in the drawing, they may not be necessarily displayed at the same time. Specifically, only at least one of the power amount information 259a and advertisement content display time point information 259b may be displayed on the display unit 251. Furthermore, time points of displaying the power amount information 259a and advertisement content display time point information 259b may be different. For example, at least one of the power amount information 259a and advertisement content display time point information 259b may be first displayed on the display unit 251, and then the other one thereof may be displayed on the display unit 251.

Information displayed on the display unit 251 and a time point of displaying the information may be dependent on the description prescribed within the mobile terminal 200, or otherwise may be configured by the user.

Here, the power amount information 259a may be configured based on a touch input onto either one of the icon (+) and icon (-), or otherwise configured based on an input to either one of the side-up key and side-down key. Furthermore, the power amount information 259a may be configured based on an input onto a physical keypad or a touch input onto a virtual keypad.

Furthermore, the advertisement content display time point information 259b may include at least one of a "display prior to charging" menu, a "display during charging" menu, and a "display subsequent to charging" menu.

At this time, when it is configured to display advertisement content prior to receiving power, wireless charging may be carried out subsequent to displaying advertisement content on the display unit 251 as many as a preset number for a preset time. Furthermore, when it is configured to display advertisement content while receiving power, advertisement content may be displayed on the display unit 251 while performing wireless charging.

On the other hand, when it is configured to display advertisement content subsequent to receiving power, wireless charging may be first carried out, and then the advertisement content may be displayed on the display unit 251. Only when advertisement content is displayed on the display unit 251 as many as a preset number for a preset time subsequent to wireless charging, wireless charging may be carried out later again.

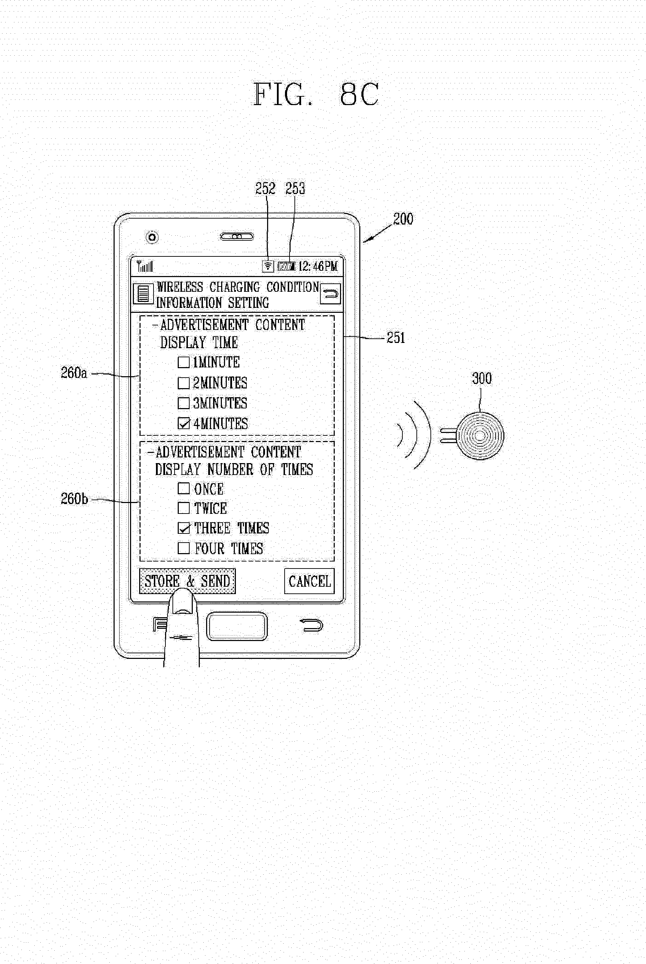

Then, referring to FIG. 8C, service guide information may include at least one of display time information 260a and display number information 260b of advertisement content. On the other hand, though not shown in the drawing, the time and number of displaying advertisement content may be configured in a random manner.

Though the display time information 260a and display number information 260b are displayed at the same time in the drawing, they may not be necessarily displayed at the same time. Specifically, only at least one of the display time information 260a and display number information 260b may be displayed on the display unit 251. Furthermore, time points of displaying the display time information 260a and display number information 260b may be different. For example, at least one of the display time information 260a and display number information 260b may be first displayed on the display unit 251, and then the other one thereof may be displayed on the display unit 251.

Furthermore, the display time information 260a and display number information 260b may be selected independently from each other, and the selection of either one may be dependent on the selection of the other one. For example, though not shown in the drawing, when "4 minutes" may be entered for the display time information 260a in case where the user selects the display number information 260b, only menus for "three times" or "four times" may be activated, but menus for "once" or "twice" may be deactivated.

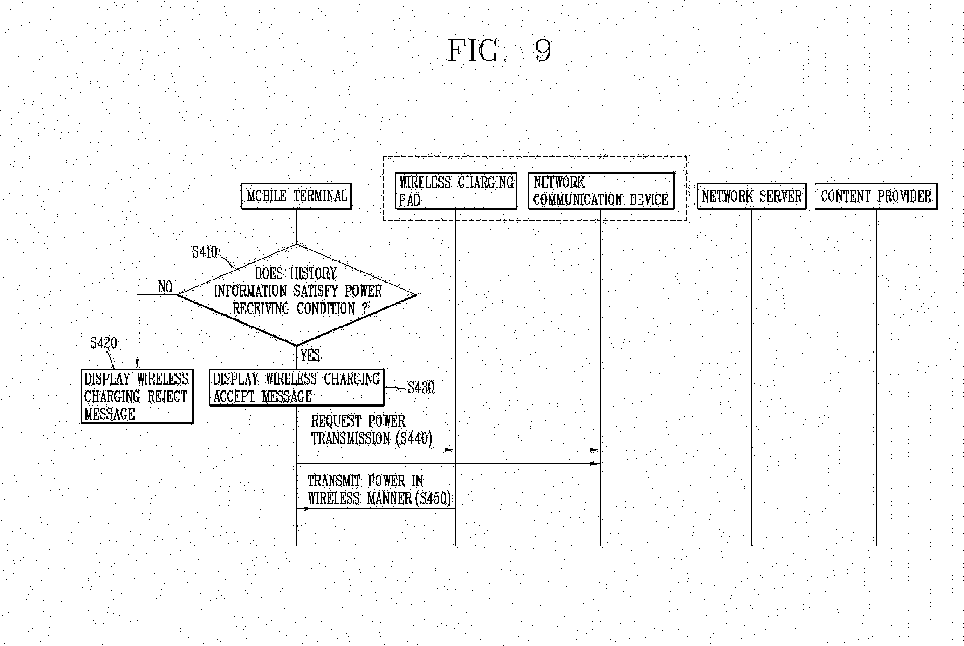

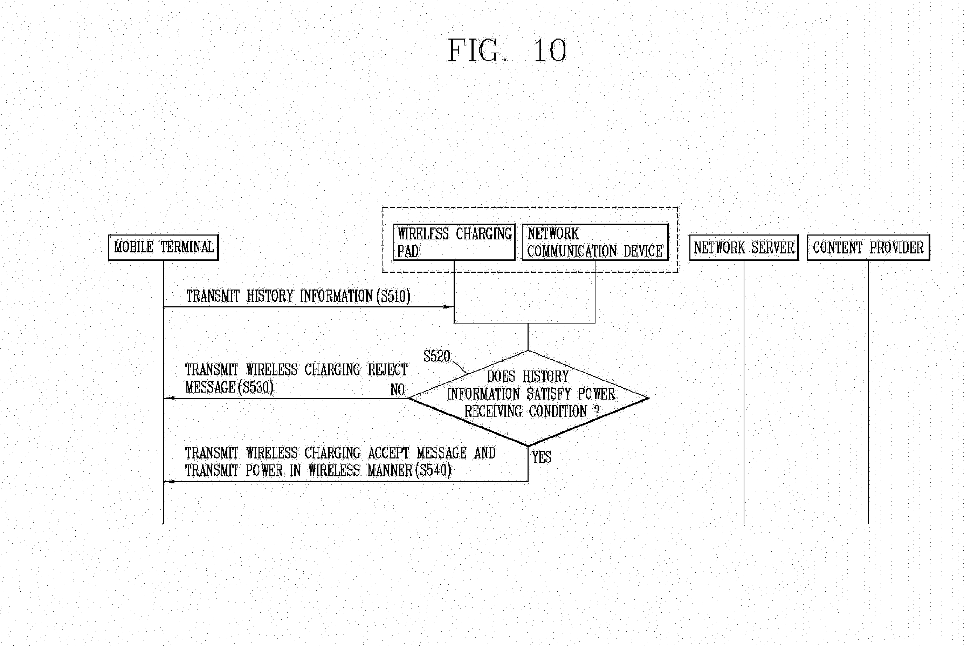

FIGS. 9 and 10 are flow charts for explaining a mobile terminal system according to still another embodiment of the present disclosure. The mobile terminal system may include a mobile terminal 100 (refer to FIG. 1), a wireless charging pad, a network communication device, a network server, and a content provider.

Here, the wireless charging pad can perform communication with a network server. The wireless charging pad may be directly or indirectly connected to a network communication device having a communication function to communicate with the network server.

FIG. 9 is a flow chart illustrating a case where a subject for determining whether or not to receive power from the wireless charging pad using at least one of history information and power receiving condition information is the mobile terminal 100.

Referring to FIG. 9, first, the process (S410) of determining whether history information satisfies a power receiving condition in the mobile terminal 100 is carried out.

Specifically, the controller 180 (refer to FIG. 1) of the mobile terminal 100 may manage history information displayed with content on the display unit 151 (refer to FIG. 1). The controller 180 may manage history information including a time point of displaying the advertisement content, a number of displaying the same, or a time of displaying the same.

At this time, when the history information satisfies a power receiving condition, the process (S430) of displaying a wireless charging accept message on the display unit 151 is carried out.

In this case, the process (S440) of allowing the mobile terminal 100 to request power transmission to the network communication device may be also carried out. The mobile terminal 100 may request power transmission to the network communication device through the wireless charging pad, or otherwise immediately request power transmission to the network communication device. Then, the process (S450) of allowing the wireless charging pad to transmit power in a wireless manner to the mobile terminal 100 is carried out.

On the other hand, when the history information does not satisfy a power receiving condition, the process (S420) of displaying a wireless charging reject message on the display unit 151 is carried out. At this time, an amount of power to be received in a wireless manner from the wireless charging pad may be adjusted based on the history information. Accordingly, the mobile terminal 100 can receive power from the wireless charging pad as much as the adjusted amount of power.

To this end, the mobile terminal 100 may control a frequency of the power receiving unit 181 (refer to FIG. 1) to limit an amount of power received in a wireless manner from the wireless charging pad.

On the other hand, FIG. 10 is a flow chart illustrating a case where a subject for determining whether or not to transmit power to the mobile terminal 100 using history information and power receiving condition information is the wireless charging pad or network communication device.

Referring to FIG. 10, first, the process (S510) of allowing the mobile terminal 100 to transmit history information to the wireless charging pad is carried out. Though not shown in the drawing, the mobile terminal 100 may also transmit history information to the network server.

Next, the process (S520) of determining whether the history information satisfies a power receiving condition in the wireless charging pad or network communication device is carried out.

Specifically, the wireless charging pad or network communication device may determine whether or not the history information satisfies a power receiving condition using the received history information and the received power receiving condition information.

At this time, when the history information satisfies a power receiving condition, the process (S540) of allowing the wireless charging pad or network communication device to transmit a wireless charging accept message to the mobile terminal 100 is carried out. On the other hand, the wireless charging pad or network communication device may also transmit power to the mobile terminal 100 only when transmitting the wireless charging accept message and then receiving an acknowledge message in response to the message from the mobile terminal 100.

On the other hand, when the history information does not satisfy a power receiving condition, the process (S530) of allowing the wireless charging pad or network communication device to transmit a wireless charging reject message to the mobile terminal 100 is carried out. At this time, the wireless charging pad or network communication device may adjust an amount of power to be received in a wireless manner to the mobile terminal 100 based on the history information. Accordingly, the wireless charging pad may transmit power to the mobile terminal 100 as much as the adjusted amount of power.

Hereinafter, the operation examples of the mobile terminal 100 for a case where the time point of displaying advertisement content is set prior to the time point of receiving power, a case where the time point of displaying advertisement content is configured subsequent to the time point of receiving power, and a case where the time point of displaying advertisement content is configured while receiving power, respectively, will be described with reference to the accompanying drawings.

### 1. In case where the time point of displaying advertisement content is set prior to the time point of receiving power

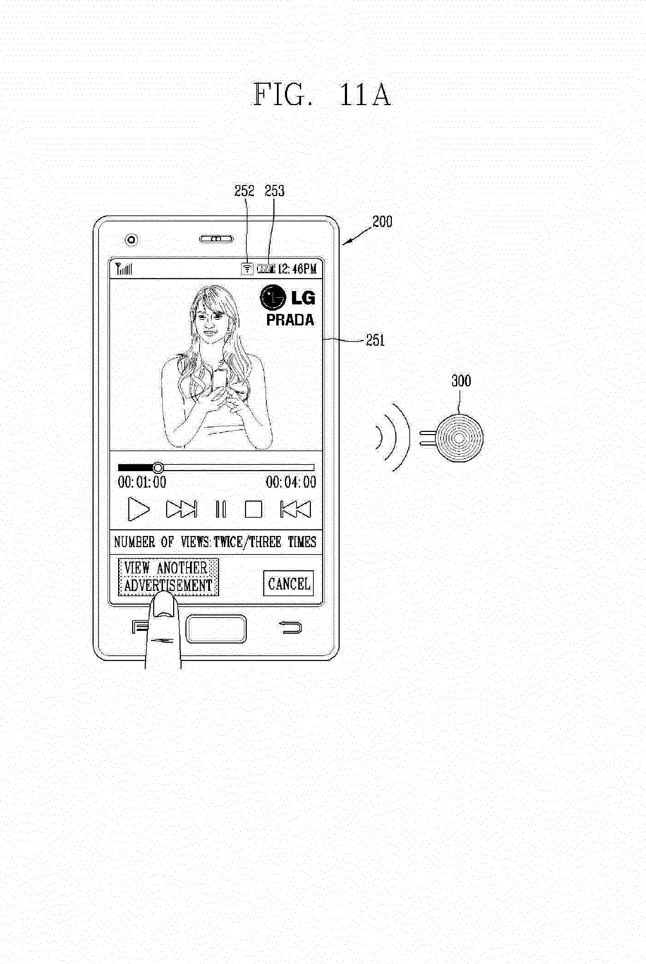

FIGS. 11A through 11D are conceptual views illustrating a first operation example of the mobile terminal 200 according to FIGS. 9 and 10. Specifically, FIGS. 11A through 11D are conceptual views illustrating a case where the time point of displaying advertisement content is set prior to the time point of receiving power.

The mobile terminal 200 may include a wireless communication unit 110 (refer to FIG. 1), a display unit 251, a controller 180 (refer to FIG. 1), and a power receiving unit 191 (refer to FIG. 1).

Referring to FIG. 11A, advertisement content may be displayed on the display unit 251. The display unit 251 may display at least one of the number and time of displaying advertisement content along with the advertisement content. On the other hand, when there are a plurality of advertisement content received from the content provider, the user may view advertisement content selected from the plurality of advertisement contents.

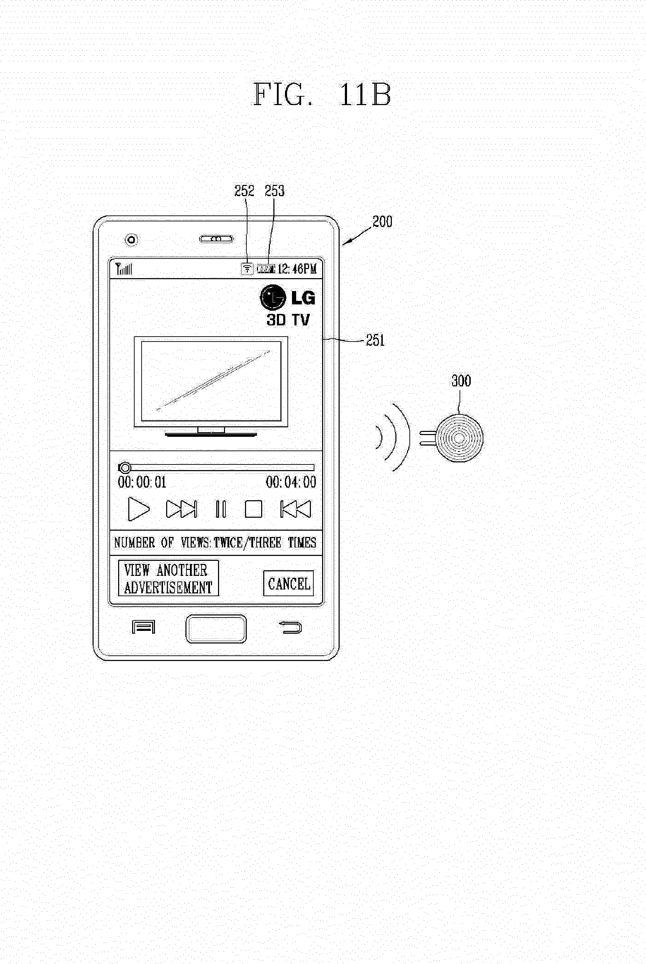

When a control command for displaying another advertisement content on the display unit 251 is sensed in a state that the advertisement content is displayed on the display unit 251, referring to FIG. 11B, the another advertisement content may be displayed on the display unit 251.

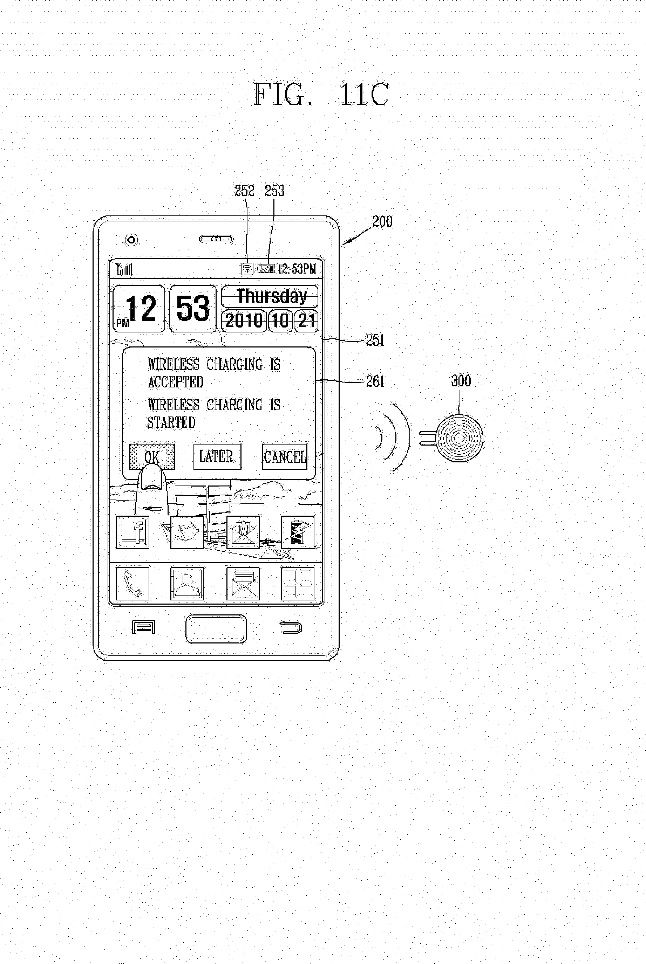

Next, when the history information of displaying advertisement content satisfies power receiving condition information, referring to FIG. 11C, a wireless charging accept message 261 may be displayed on the display unit 251. At this time, when a control command for performing wireless charging is sensed, the mobile terminal 200 may request power transmission to the wireless charging pad 300 or network communication device.

Though not shown in the drawing, when a control command for performing wireless charging later, the mobile terminal 200 may receive power from the wireless charging pad 300 when performing wireless charging later.

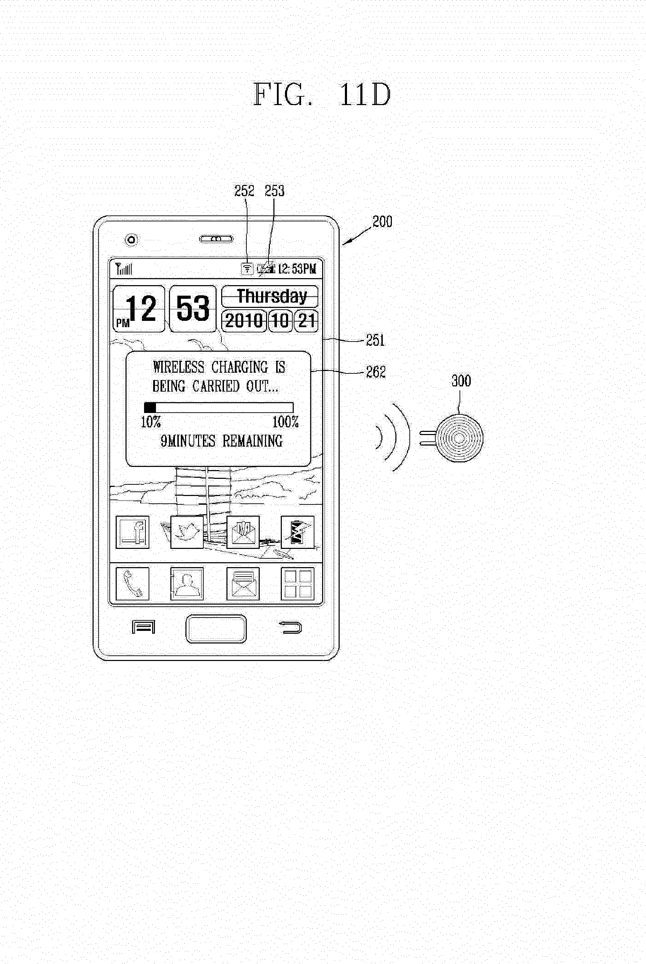

On the other hand, the mobile terminal 200 may request power transmission and then receive power in a wireless manner from the wireless charging pad 300. At this time, referring to FIG. 11D, the controller 180 may measure an amount of power received in a wireless manner from the wireless charging pad 300, and the display unit 251 may display an icon, for example, progress bar 262, indicating power amount information. Furthermore, the display unit 251 may display an icon 253 indicating that wireless charging is being carried out.

However, the form of the icon indicating power amount information is not limited to the form of a progress bar. The icon may be in the form of a gauge board indicating power amount information as an arrow.

### 2. In case where the time point of displaying advertisement content is set subsequent to the time point of receiving power

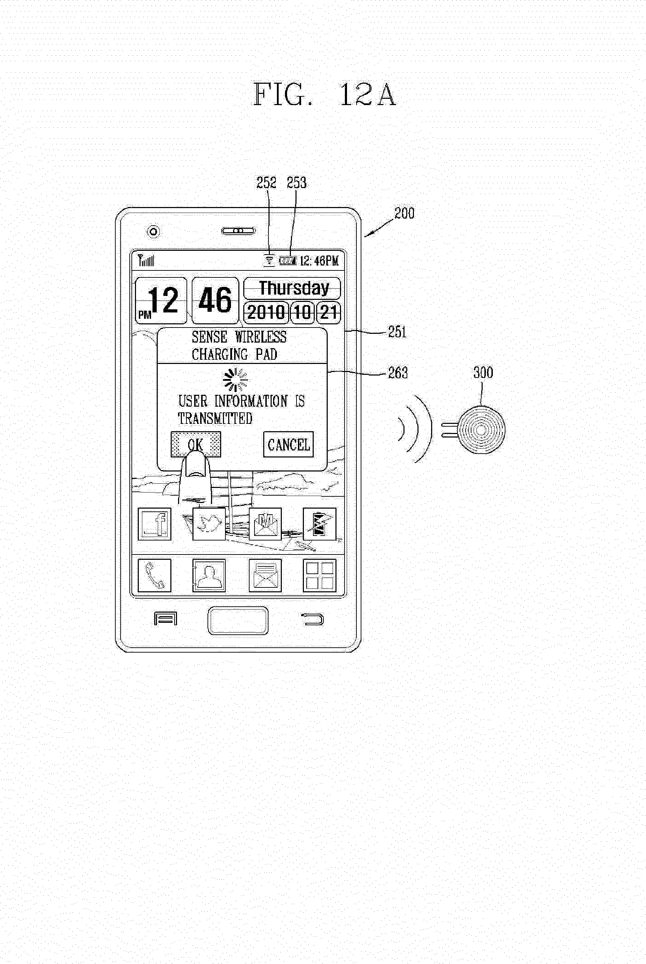

FIGS. 12A through 12D are conceptual views illustrating a second operation example of a mobile terminal according to FIGS. 9 and 10.

Specifically, FIGS. 12A through 12D are conceptual views illustrating a case where the history information does not satisfy a power receiving condition when the time point of displaying advertisement content is set subsequent to the time point of receiving power in the past, and it is currently desired to perform new wireless charging. The mobile terminal 200 may include a wireless communication unit 110 (refer to FIG. 1), a display unit 251, a controller 180 (refer to FIG. 1), and a power receiving unit 191 (refer to FIG. 1).

The controller 180 may manage history information in a different manner according to the time point of displaying advertisement content based on the time point of receiving power. For example, when the time point of displaying advertisement content is set subsequent to the time point of receiving power, the mobile terminal 200 may receive power in a wireless manner from the wireless charging pad 300 regardless of whether or not the advertisement content is displayed. At this time, the controller 180 may store the history information for displaying advertisement content in the memory 160 (refer to FIG. 1) to use it when it is about to receive power in a wireless manner again later.

Specifically, referring to FIG. 12A, when it is about to perform new wireless charging, namely, when the mobile terminal 200 senses the wireless charging pad 300 again, the past history information on the display of advertisement content may be referred to.

More specifically, a message 263 indicating that user information is transmitted may be displayed on the display unit 251, thereby allowing the user to select whether or not to transmit user information. On the other hand, though not shown in the drawing, subsequent to transmitting user information, a message indicating that user information has been transmitted may be displayed on the display unit 251. Subsequent to transmitting user information, the past history information on the display of advertisement content may be referred to.

Furthermore, though not shown in the drawing, a message for selecting whether or not to start wireless charging may be displayed on the display unit 251. Accordingly, the user may select whether or not to start wireless charging.

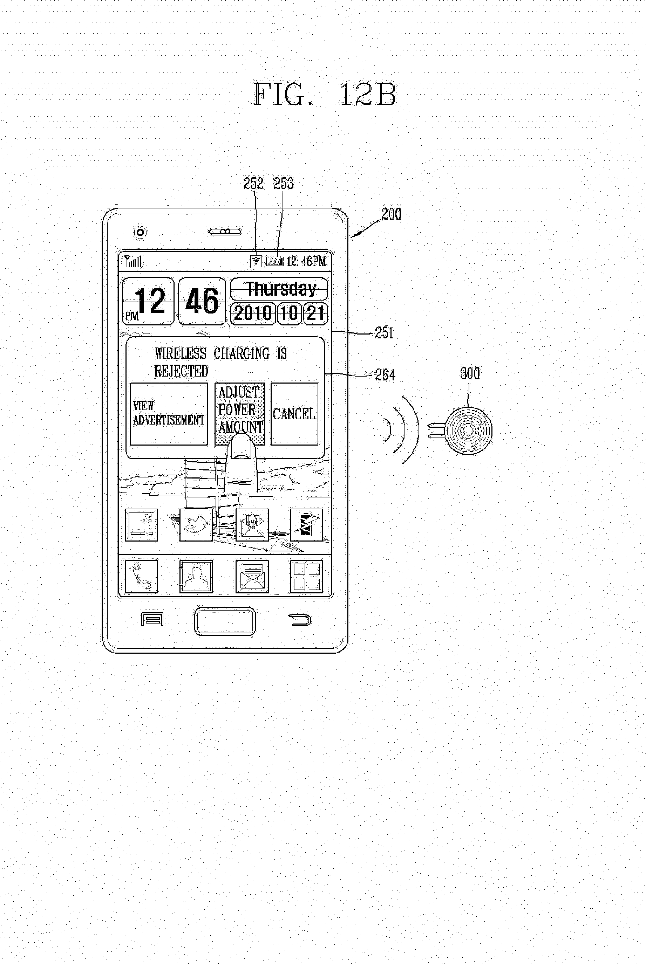

Next, when the history information does not satisfy a power receiving condition, referring to FIG. 12B, a wireless charging reject message 264 may be displayed on the display unit 251. As illustrated in the drawing, the wireless charging reject message 264 may include an icon corresponding to an advertisement view function (hereinafter, referred to as an "advertisement view icon") and an icon corresponding to a power amount adjustment function (hereinafter, referred to as a "power amount adjustment icon").

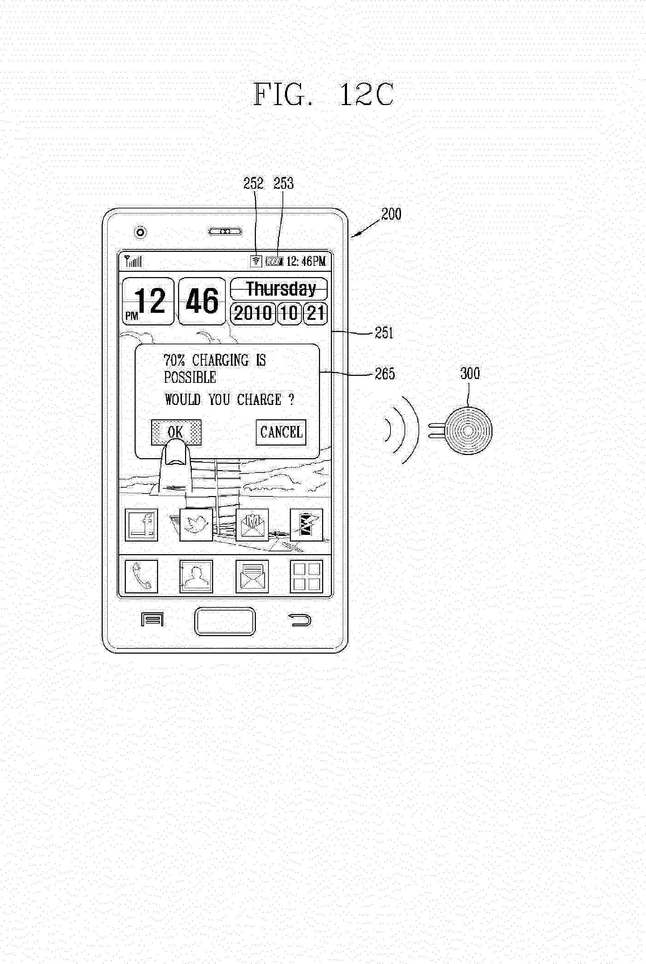

At this time, when a touch input onto the power amount adjustment function is sensed, referring to FIG. 12C, the mobile terminal 200 may adjust an amount of power to be received in a wireless manner by the power receiving unit 191 from the wireless charging pad 300 based on the history information. The display unit 251 may display a message 265 indicating the adjusted power amount information.

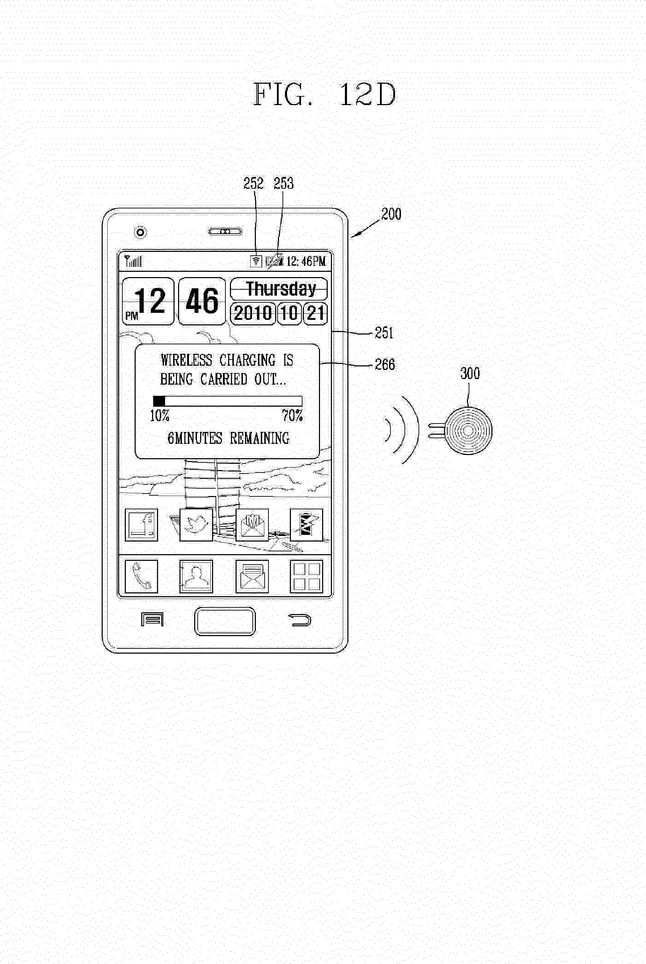

Then, the mobile terminal 200 may receive power in a wireless manner from the wireless charging pad 300. At this time, referring to FIG. 12D, the controller 180 may measure an amount of power received in a wireless manner by the power receiving unit 191 from the wireless charging pad 300, and the display unit 251 may display a progress bar 266 indicating power amount information. Furthermore, the display unit 251 may display an icon 253 indicating that wireless charging is being carried out.

### 3. In case where the time point of displaying advertisement content is set subsequent to while receiving power

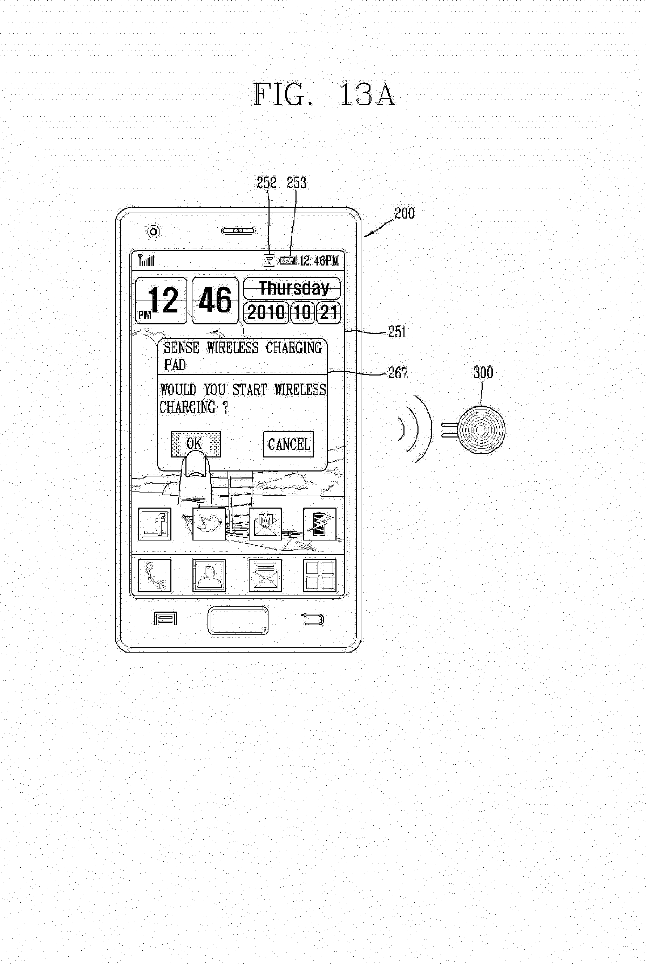

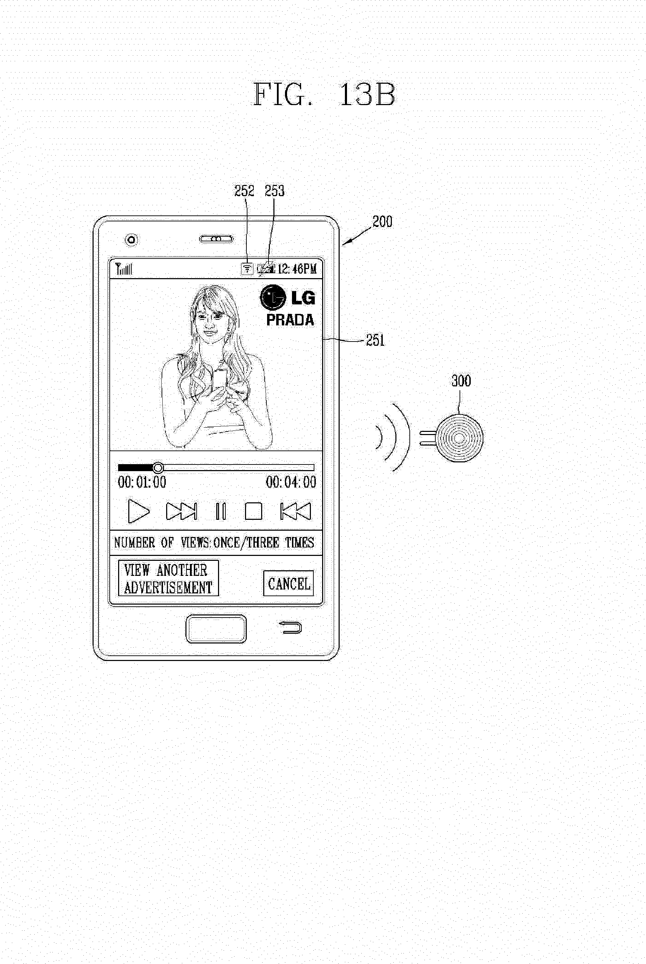

FIGS. 13A and 13B are conceptual views illustrating a third operation example of a mobile terminal according to FIGS. 9 and 10.

Specifically, FIGS. 13A and 13B are conceptual views illustrating a case where the time point of displaying advertisement content is set subsequent to while receiving power. The mobile terminal 200 may include a wireless communication unit 110 (refer to FIG. 1), a display unit display unit 251, a controller 180 (refer to FIG. 1), and a power receiving unit 191 (refer to FIG. 1).

Referring to FIG. 13A, a message for selecting whether or not to start wireless charging may be displayed on the display unit 251. Accordingly, the user may select whether or not to start wireless charging.

When a control command for performing wireless charging is sensed, referring to FIG. 13B, the mobile terminal 200 may request power transmission to the wireless charging pad 300 or network communication device. The mobile terminal 200 may request power transmission and then receive power in a wireless manner from the wireless charging pad 300. At this time, the display unit 251 may display an icon 253 that wireless charging is being carried out.

The advertisement content may be displayed on the display unit 251 while at the same to receiving power in a wireless manner. The display unit 251 may display at least one of the number and time of displaying advertisement content along with the advertisement content. On the other hand, when there are a plurality of advertisement content received from the content provider, the user may view advertisement content selected from the plurality of advertisement contents.

Hereinafter, the mobile terminal 100 capable of wireless charging using various payment means and a control method thereof will be described with reference to the accompanying drawings.

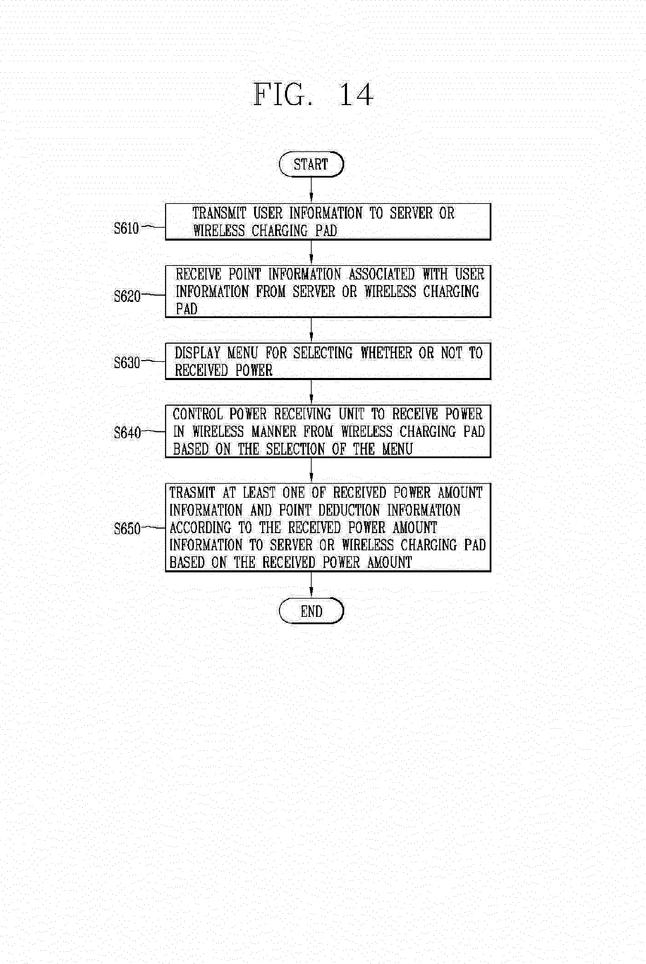

FIG. 14 is a flow chart for explaining the mobile terminal 100 (refer to FIG. 1) according to another embodiment of the present disclosure. The mobile terminal 100 may include a power receiving unit 191 (refer to FIG. 1), a wireless communication unit 110 (refer to FIG. 1), and a controller 180 (refer to FIG. 1).

Referring to FIG. 14, the process (S61 0) of transmitting user information to the server or wireless charging pad is carried out.

The wireless communication unit 110 may transmit the ID of the mobile terminal 100 as user information, and also may transmit at least one of the user's age, gender, occupation, address and interest information to the server or wireless charging pad.

Next, the process (S620) of receiving point information associated with user information from the server or wireless charging pad is carried out.

Specifically, the mobile terminal 100 may perform payment through near field communication with an external device. Here, the external device may include a wireless charging pad.

When the mobile terminal 100 performs payment through near field communication, at least one of payment information or point reserve information may be transmitted to the server or network. Furthermore, the mobile terminal 100 may receive at least one of payment approval information, reserved points information and remaining points information. At this time, at least one of payment approval information, reserved points information and remaining points information may be also displayed on the display unit 151.

On the other hand, in case where a control command for receiving point information is sensed even when the mobile terminal 100 does not perform payment, the mobile terminal 100 may receive point information. For example, when the mobile terminal 100 is located adjacent to the wireless charging pad, the mobile terminal 100 may receive point information. Furthermore, even when a menu for receiving point information displayed on the display unit 151 of the mobile terminal 100 is selected, the mobile terminal 100 may receive point information.

Then, the process (S630) of displaying a menu for selecting whether or not to receive power and the process (S640) of transmitting at least one of received power amount information and point deduction information according to the received power amount information to the server or wireless charging pad to deduct the point based on the received power amount are carried out.

Specifically, the display unit 151 may display a menu for selecting whether or not to receive power using point information. The controller 180 may display guide information for point deduction along with the menu. Here, the menu may be displayed in a region displayed with a user interface in the form of a text message or graphic message on the display unit 151. Furthermore, a popup window containing the menu may be displayed on the display unit 151.

Next, the process (S640) of controlling the power receiving unit 191 to receive power in a wireless manner from the wireless charging pad based on the selection of the menu is carried out.

When a control command for receiving power using point information is sensed, the controller 180 may control the power receiving unit 191 to receive power in a wireless manner from the wireless charging pad. At this time, the power receiving unit 191 may receive power in a wireless manner as much as a preset amount of power and the point may be deducted as much as the preset amount.

On the other hand, though not shown in the drawing, the wireless communication unit 110 may point guide information for determining an amount of power to be received from the server or wireless charging pad. Here, the point guide information may include at least one of an amount of power to be received in a wireless manner from the wireless charging pad and points to be deducted based on the amount of power to be received.

The controller 180 may configure power receiving condition information based on the selection of point guide information. For example, when "50%" is selected for the amount of power to be received, points to be deducted can be determined as "100 points" based on this. At this time, the power receiving condition information may be "the user's remaining points are greater than 100 points".

When the user's point information satisfies power receiving condition information, for example, when the remaining points are greater than 100 points, the controller 180 may control the power receiving unit 191 to receive power in a wireless manner from the wireless charging pad.

On the other hand, when the user's point information does not satisfy power receiving condition information, for example, when the remaining points are less than 100 points, the controller 180 may control may display a message indicating that the power receiving condition is not satisfied may be displayed on the display unit 151. At this time, the controller 180 may perform payment as much as the remaining points using another payment means or may adjust an amount of power or may display advertisement content on the display unit 151.

On the other hand, the controller 180 may transmit point information and power receiving condition information to the server or wireless charging pad, and at this time, the server or wireless charging pad may determine whether or not the point information satisfies the power receiving condition, and accordingly the mobile terminal 100 may receive either one of a wireless charging accept message or a wireless charging reject message from the server or wireless charging pad.

Then, the mobile terminal 100 may transmit at least one of the received power amount information and point deduction information according to the received power amount information to the server or wireless charging pad to deduct points based on the received amount of power. Furthermore, the mobile terminal 100 may display at least one of the received power amount information and point deduction information according to the received power amount information on the display unit 151.

As described above, according to the present disclosure, wireless charging fee can be paid off using the user's points. For example, when the user pays the price of a product using near field communication, wireless charging fee can be paid off using the reserved points. In this manner, wireless charging fee payment means can be diversified, thereby allowing a business provider to create profit, and enhancing the user's convenience.

Furthermore, according to the present disclosure, an advertisement content viewing condition accompanied by the wireless charging of the mobile terminal 100 may be selected by the user, thereby adjusting an amount of power to be charged during wireless charging. Accordingly, public power resources can be effectively used.

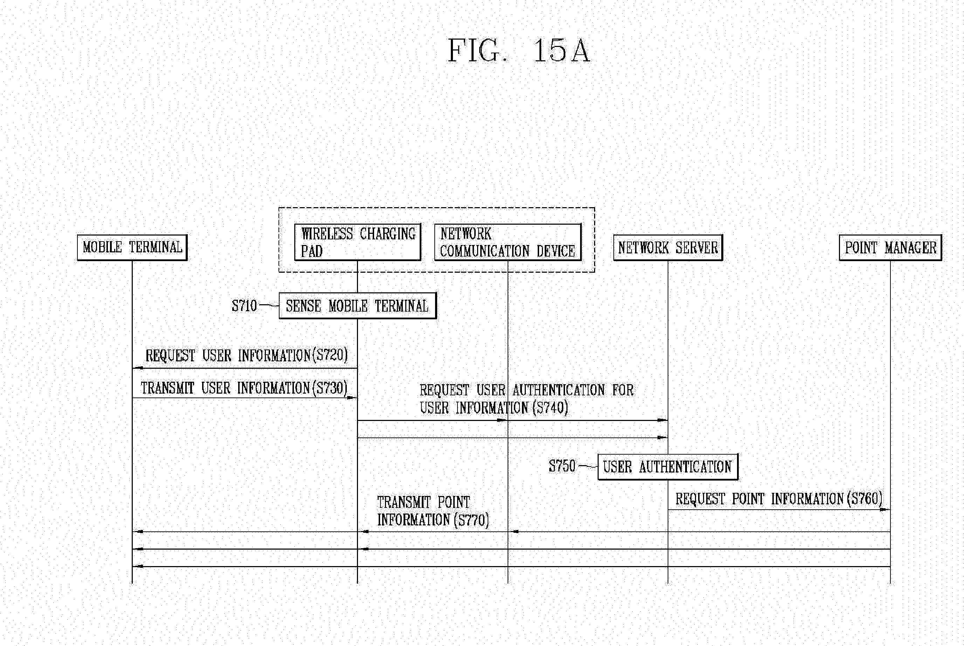

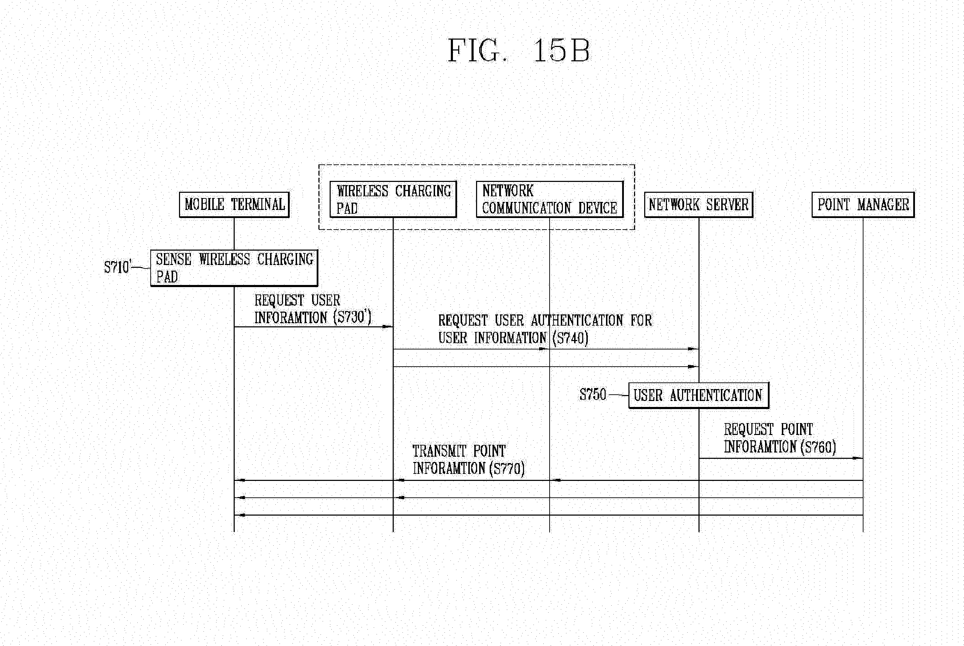

FIGS. 15A and 15B are flow charts for explaining a mobile terminal system according to still another embodiment of the present disclosure. The mobile terminal system may include a mobile terminal 100 (refer to FIG. 1), a wireless charging pad, a network communication device, a network server and a point manager. Hereinafter, a description overlapping with the foregoing description will be omitted.

Referring to FIG. 15A, first, the process (S710) of allowing the wireless charging pad to sense the mobile terminal 100 is carried out. Next, the process (S720) of allowing the wireless charging pad to request user information to the mobile terminal 100 and the process (S730) of allowing the mobile terminal 100 to transmit user information to the wireless charging pad are carried out.

On the contrary, referring to FIG. 15B, first, the process (S710') of allowing the mobile terminal 100 to sense the wireless charging pad is carried out. The mobile terminal 100 may receive the ID of the wireless charging pad through wireless communication to sense the wireless charging pad. At this time, the mobile terminal 100 may immediately transmit user information to the wireless charging pad. Next, the process (S730') of allowing the mobile terminal 100 to transmit user information to the wireless charging pad is carried out.

Then, referring to FIGS. 15A and 15B together, the process (S740) of allowing the wireless charging pad to request user authentication for the user information to the network server is carried out.

Specifically, the wireless charging pad may request user authentication to the network server through the network communication device, or otherwise immediately request user authentication to the network server.

Next, the process (S750) of performing user authentication in the network server is carried out. The network server may perform user authentication using the received user information and information stored in the server.

Then, the process (S760) of allowing the network server to request point information to the point manager and the process (S770) of allowing the point manger to transmit point information to the mobile terminal 100 are carried out.

Specifically, the point manager may perform user authentication, and then immediately transmit user information to the point manager. According to an embodiment, the user information may include the user's ID of the mobile terminal 100. In this case, the point manager may transmit point information corresponding to the user information to the mobile terminal 100 using the received user information.

The point manager may transmit point information to the wireless charging pad through the network communication device, or otherwise immediately transmit point information to the wireless charging pad, and the wireless charging pad may transmit point information to the mobile terminal 100. Furthermore, the point manager may immediately transmit point information to the mobile terminal 100.

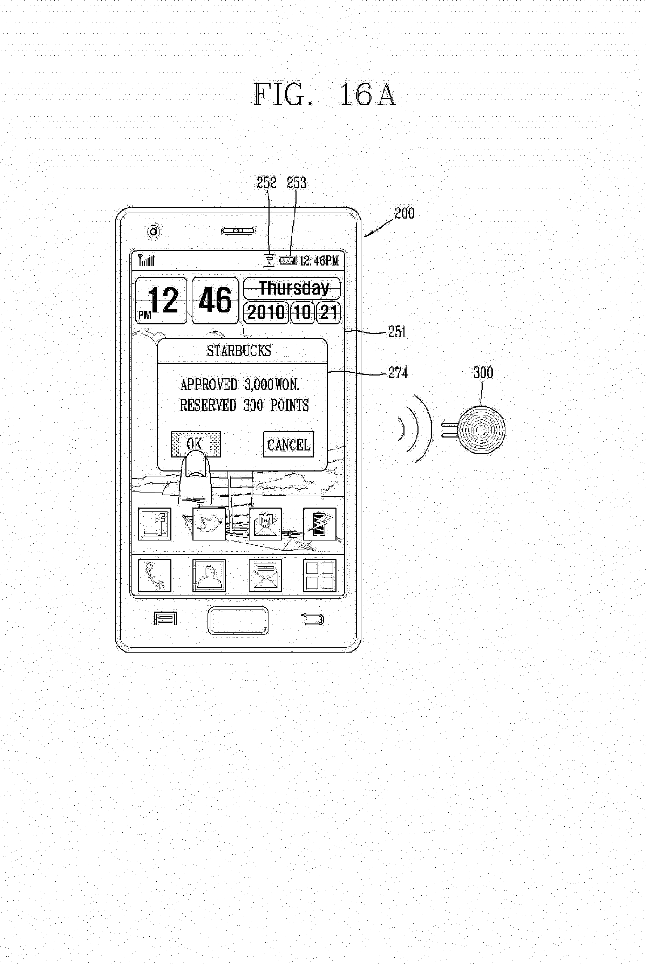

FIGS. 16A through 16C are conceptual views illustrating a first operation example of a mobile terminal according to FIGS. 15Aand 15B. Specifically, FIGS. 16A through 16C are conceptual views illustrating an example in which the mobile terminal 200 performs payment using near field communication and then senses the wireless charging pad.

The mobile terminal 200 may include a wireless communication unit 110 (refer to FIG. 1), a controller 180 (refer to FIG. 1), and a power receiving unit 191 (refer to FIG. 1).

Referring to FIG. 16A, the wireless communication unit 110 of the mobile terminal 200 may perform payment through near field communication. At this time, at least one of payment information and point reserve information may be transmitted to the server or network. Furthermore, the wireless communication unit 110 may receive at least one of payment approval information, reserved points information, and remaining points information from the server or network.

Then, as illustrated in the drawing, a message 274 containing the approval information and reserved point information may be displayed on the display unit 251. Though the approval information and reserved point information are displayed at the same time on the display unit 251, they may not be necessarily displayed at the same time. For example, at least one of payment approval information, reserved points information, and remaining points information may be displayed on the display unit 251. Furthermore, time points of displaying the payment approval information, reserved points information, and remaining points information may be different.

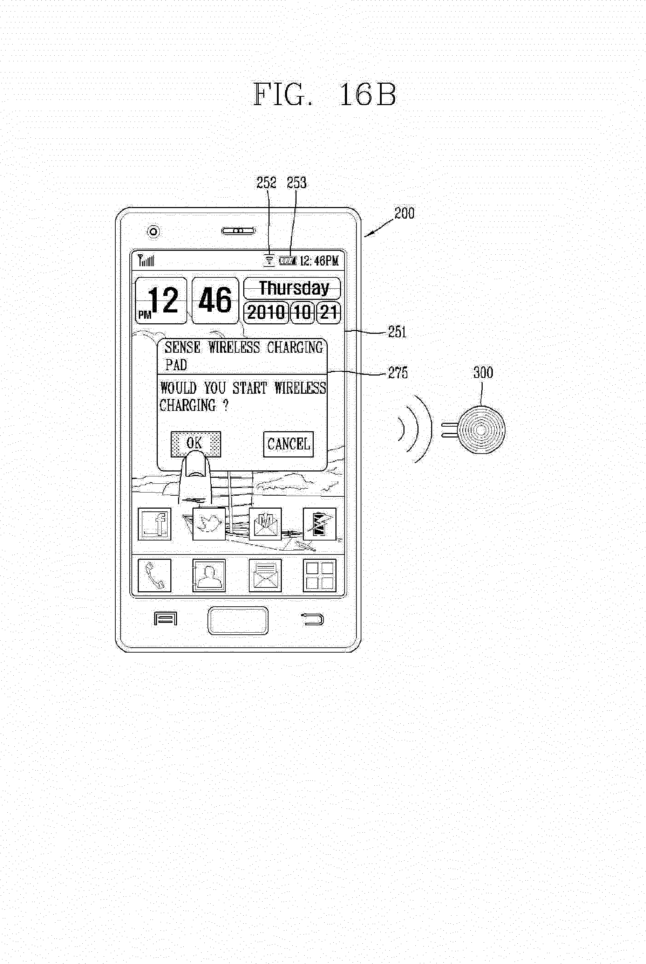

Then, referring to FIG. 16B, the wireless charging pad 300 may sense the mobile terminal 200 according to a change of current flowing through the coil, and the mobile terminal 200 may also receive minimum power from the wireless charging pad 300 to sense the wireless charging pad 300. On the other hand, the mobile terminal 200 and wireless charging pad 300 may sense each other using at least one of near field communication, Bluetooth communication, infrared communication and Zigbee communication.

When the wireless charging pad 300 is sensed, a message 257 for selecting whether or not to start wireless charging may be displayed on the display unit 251 of the mobile terminal 200. Accordingly, the user may select whether or not to start wireless charging.

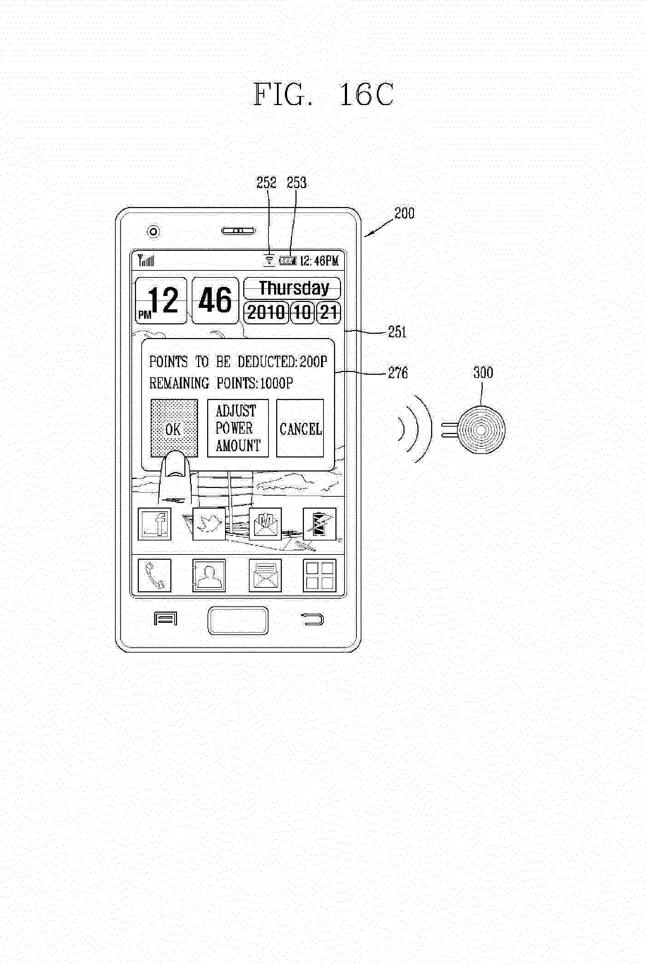

Next, referring to FIG. 16C, a message 276 containing points-to-be-deducted information and remaining points information based on an amount of power to be charged may be displayed on the display unit 251. Though the containing the points-to-be-deducted information and remaining points are displayed at the same time on the display unit 251 on the drawing, they may not be necessarily displayed at the same time. For example, at least one of the points-to-be-deducted information and remaining points information may be displayed on the display unit 251. For example, at least one of the points-to-be-deducted information and remaining points information may be displayed on the display unit 251. Furthermore, time points of displaying the points-to-be-deducted information and remaining points information may be different.

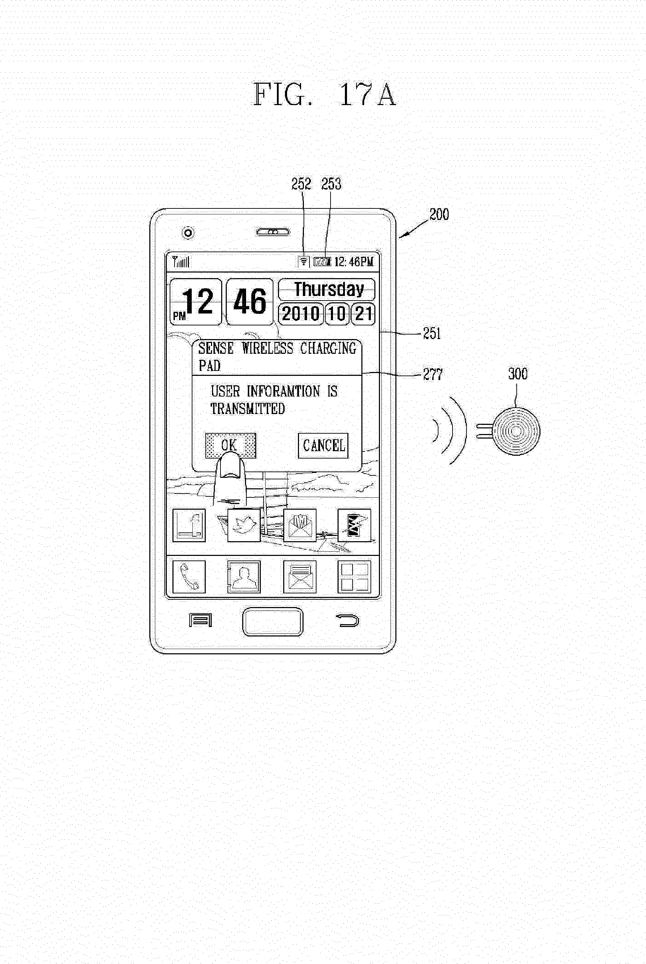

FIGS. 17A through 17C are conceptual views illustrating a second operation example of a mobile terminal according to FIGS. 15Aand 15B. Specifically, FIGS. 17A through 17C are conceptual views illustrating an example in which the mobile terminal 200 senses the wireless charging pad.

The mobile terminal 200 may include a wireless communication unit 110 (refer to FIG. 1), a controller 180 (refer to FIG. 1), and a power receiving unit 191 (refer to FIG. 1).

Referring to FIG. 17A, when the mobile terminal 200 is located adjacent to the wireless charging pad, a message 277 indicating that user information is transmitted may be displayed on the display unit 251 of the mobile terminal 200. Here, the user information may include the user's ID.

The user may select whether or not the user information has been transmitted by displaying a message 277 indicating that user information is transmitted on the display unit 251. On the other hand, though not shown in the drawing, subsequent to transmitting the user information, a message indicating that the user information has been transmitted may be displayed on the display unit 251.

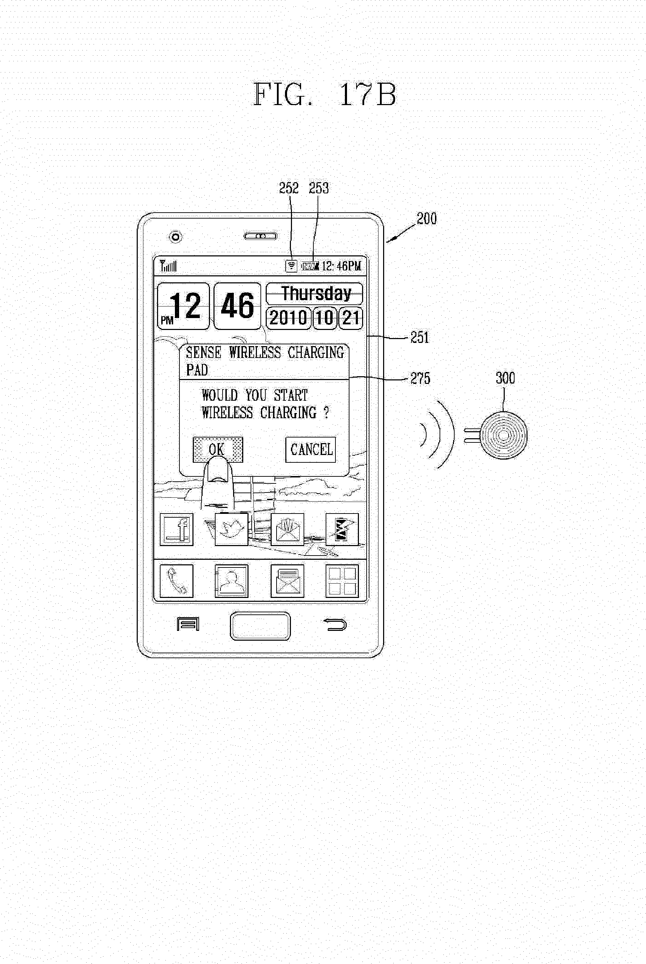

Furthermore, as illustrated in FIG. 17B, a message 275 for selecting whether or not to start wireless charging may be displayed on the display unit 251. Accordingly, the user may select whether or not to start wireless charging.

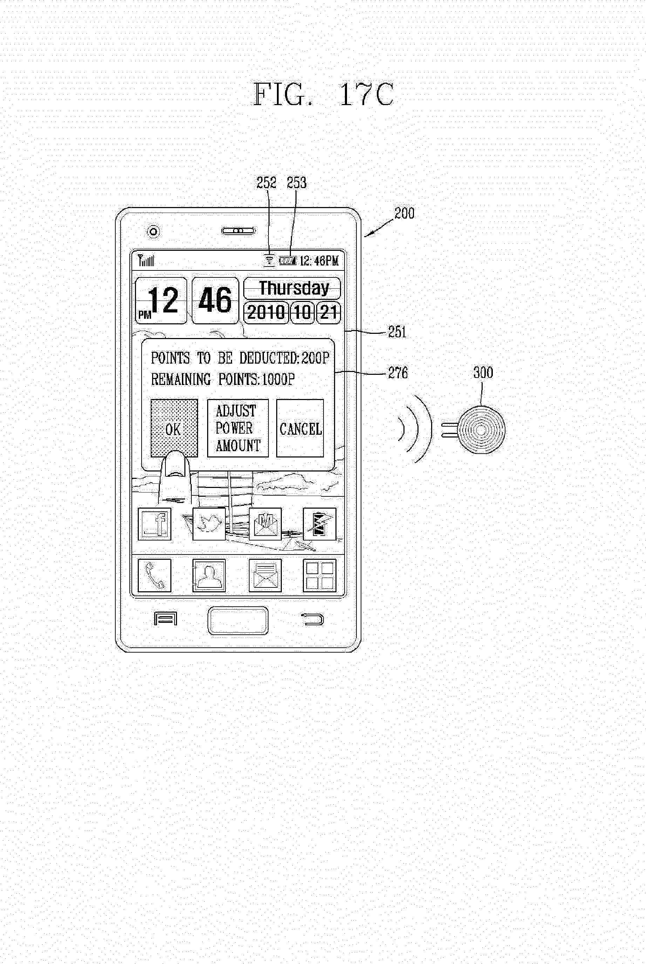

Next, referring to FIG. 17C, a message 276 containing the points-to-be-deducted information and remaining points information based on an amount of power to be charged may be displayed on the display unit 251. Though the containing the points-to-be-deducted information and remaining points are displayed at the same time on the display unit 251 on the drawing, they may not be necessarily displayed at the same time. For example, at least one of the points-to-be-deducted information and remaining points information may be displayed on the display unit 251. For example, at least one of the points-to-be-deducted information and remaining points information may be displayed on the display unit 251. Furthermore, time points of displaying the points-to-be-deducted information and remaining points information may be different.

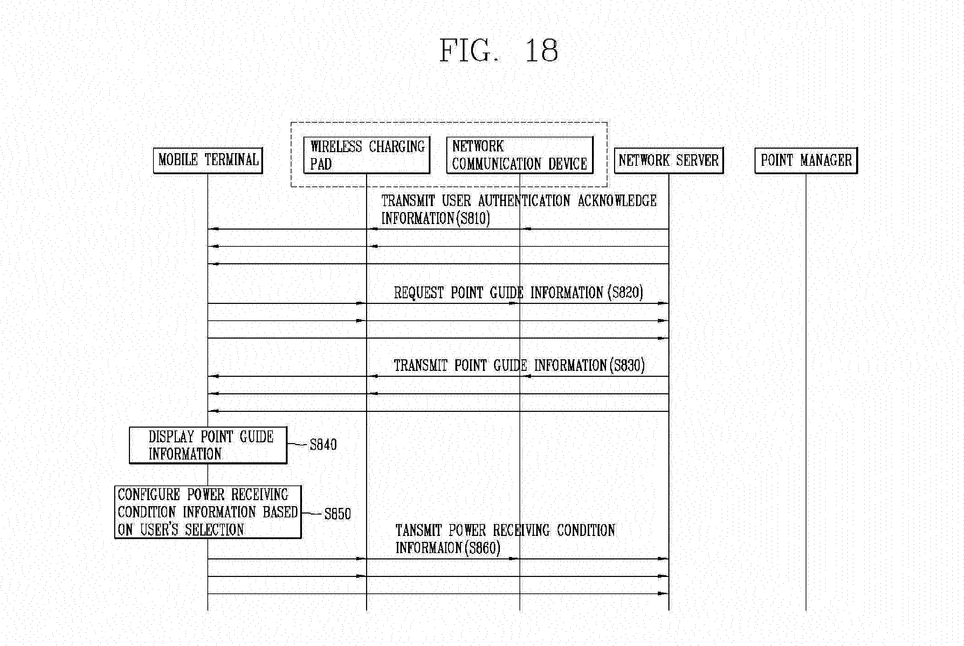

FIG. 18 is a flow chart for explaining a mobile terminal system according to yet still another embodiment of the present disclosure. Specifically, FIG. 18 is a flow chart illustrating an example of configuring power receiving condition information using point guide information.

The mobile terminal system may include a mobile terminal 100 (refer to FIG. 1), a wireless charging pad, a network communication device, a network server and a point manager.

Referring to FIG. 18, first, the process (S810) of allowing the network server to transmit user authentication acknowledge information to the mobile terminal 100 is carried out. Next, the process (S820) of allowing the mobile terminal 100 to request point guide information to the network server is carried out.

Specifically, the mobile terminal 100 may request point guide information to the wireless charging pad. The wireless charging pad may request point guide information to the network server through the network communication device, or otherwise immediately request point guide information to the network server. Furthermore, the mobile terminal 100 may immediately request point guide information to the network server.

On the other hand, the foregoing process (S810) of allowing the network server to transmit user authentication acknowledge information to the mobile terminal 100 and the foregoing process (S820) of allowing the mobile terminal 100 to request point guide information to the network server may be omitted. For example, when the wireless charging pad senses the mobile terminal 100, the network server may complete user authentication and then immediately transmit point guide information to the mobile terminal 100.

Then, the process (S830) of allowing the network server to transmit point guide information to the mobile terminal is carried out.

Specifically, the network server may transmit point guide information to the wireless charging pad through a network communication device or otherwise immediately transmit point guide information to the wireless charging pad, and the wireless charging pad may transmit point guide information to the mobile terminal 100. Furthermore, the network server may immediately transmit point guide information to the mobile terminal 100.

Here, the point guide information is information for configuring power receiving condition information, including at least one of an amount of power to be received in a wireless manner from the wireless charging pad and points-to-be-deducted information.

Next, the process (S840) of displaying point guide information in the mobile terminal 100 and the process (S850) of configuring power receiving condition information based on the user's selection are carried out.

Specifically, power receiving condition information may be configured based on the user's selection of service point information displayed on the display unit display unit 151 (refer to FIG. 1) of the mobile terminal 100. On the other hand, prescribed power receiving condition may be also used without using the user's selection.

Then, the process (S860) of allowing the mobile terminal 100 to transmit power receiving condition information to the network server is carried out.

Specifically, the mobile terminal 100 may transmit power receiving condition information to the wireless charging pad. The wireless charging pad may transmit power receiving condition information to the network server through the network communication device or otherwise immediately transmit power receiving condition information to the network server. Furthermore, the mobile terminal 100 may immediately transmit power receiving condition information to the network server.

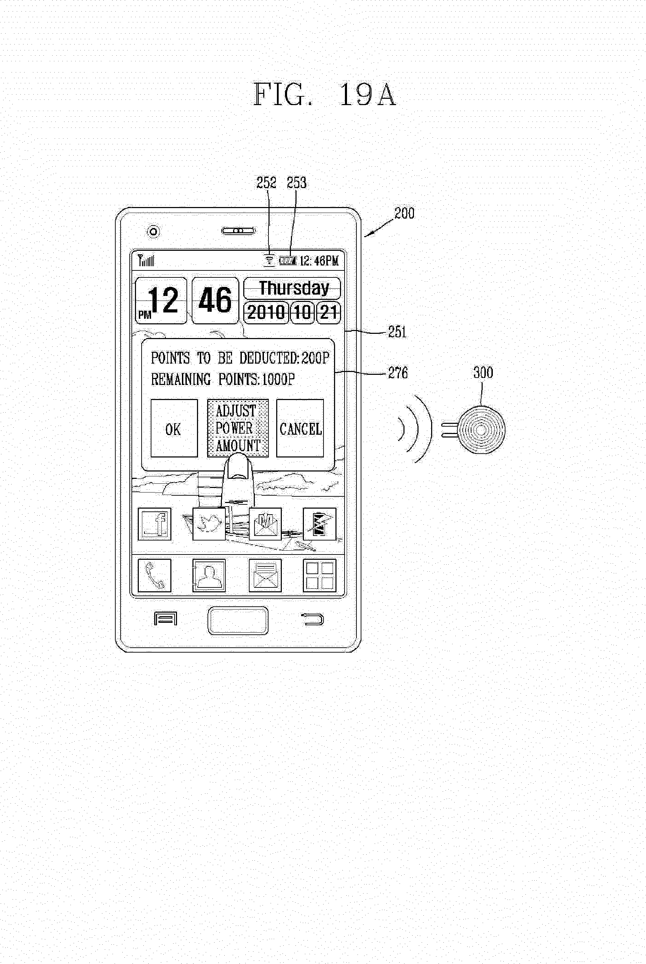

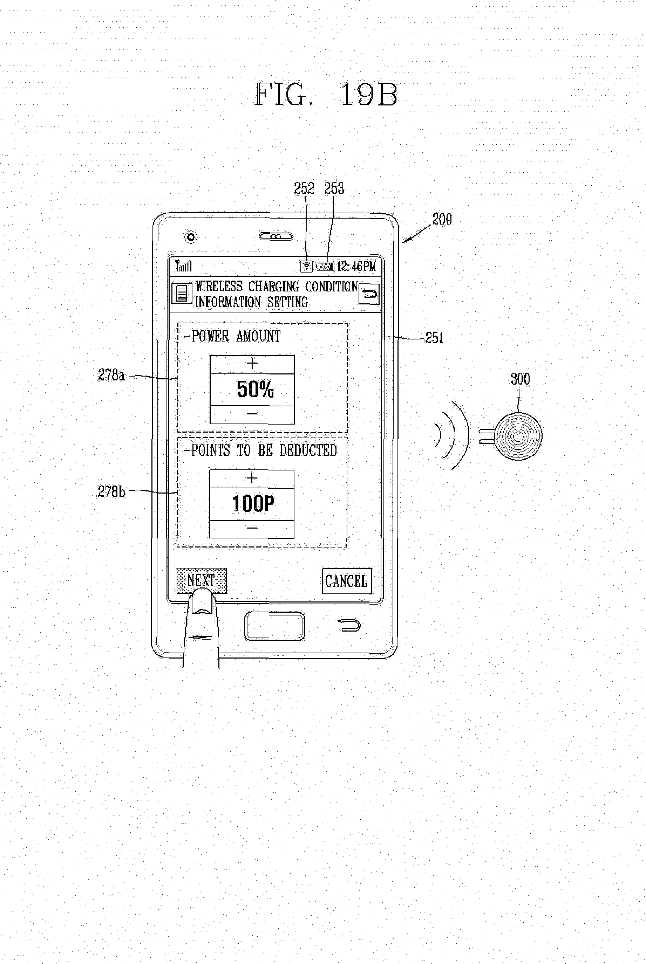

FIGS. 19A and 19B are conceptual views illustrating a first operation example of the mobile terminal 200 according to FIG. 18. Specifically, FIGS. 19A and 19B are conceptual views illustrating an example of configuring power receiving condition information using point guide information.

The mobile terminal 200 may include a wireless communication unit 110 (refer to FIG. 1), a controller 180 (refer to FIG. 1), and a power receiving unit 191 (refer to FIG. 1).

Referring to FIG. 19A, in a state that a message 276 containing points-to-be-deducted information and remaining points information are displayed on the display unit 251 of the mobile terminal 200, an amount of power to be received may be adjusted based on a touch input applied to the message 276.

On the other hand, though not shown in the drawing, an amount of power to be received may be adjusted even when a control command for displaying point guide information is sensed. At this time, the adjusted power amount information may be stored in the memory 160 (refer to FIG. 1) and then continuously used later.

Next, referring to FIG. 19B, point guide information for configuring wireless charging condition information may be displayed on the display unit 251. As illustrated in the drawing, the point guide information may include at least one of power amount information 278a to be received in a wireless manner from the wireless charging pad 300 and points-to-be-deducted information 278b based on the power amount information to be received.

Though the power amount information 278a and points-to-be-deducted information 278b are displayed at the same time in the drawing, they may not be necessarily displayed at the same time. Specifically, only either one of the power amount information 278a and points-to-be-deducted information 278b may be displayed on the display unit 251. Furthermore, time points of displaying the power amount information 278a and points-to-be-deducted information 278b may be different. For example, at least one of the power amount information 278a and points-to-be-deducted information 278b may be first displayed on the display unit 251, and then the other one thereof may be displayed on the display unit 251.

Information displayed on the display unit 251 and a time point of displaying the information may be dependent on the description prescribed within the mobile terminal 200 or may be configured by the user.

Here, the power amount information 278a and points-to-be-deducted information 278b may be configured based on a touch input onto either one of the icon (+) and icon (-), or otherwise configured based on an input to either one of the side-up key and side-down key. Furthermore, the power amount information 278a and points-to-be-deducted information 278b may be configured based on an input onto a physical keypad or a touch input onto a virtual keypad.

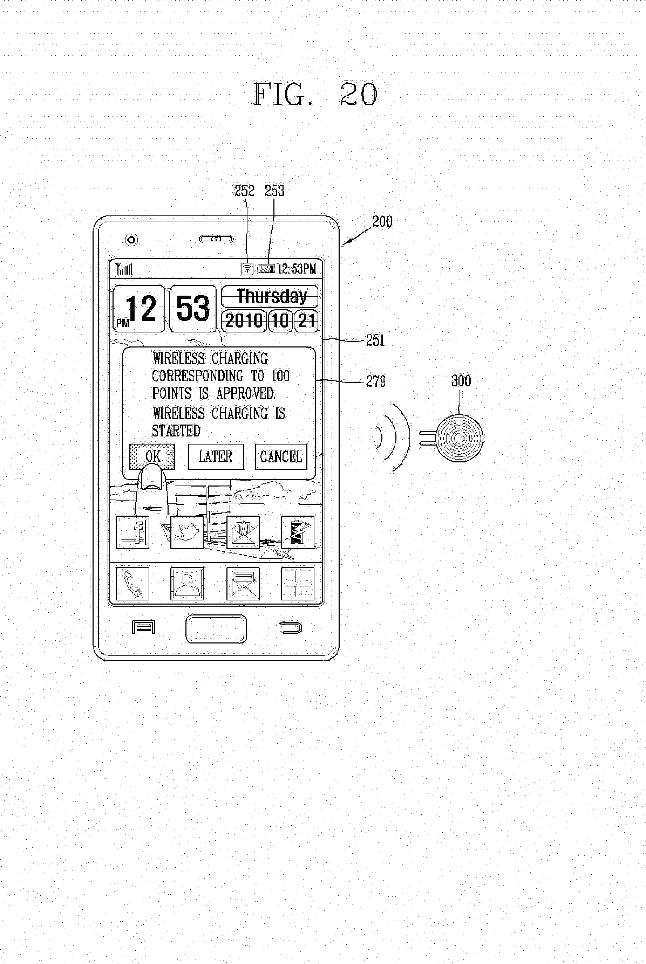

FIG. 20 is a conceptual view illustrating a second operation example of a mobile terminal according to FIG. 18. FIG. 20 is a conceptual view illustrating a case where the point information satisfies a power receiving condition information.

The mobile terminal 200 may include a wireless communication unit 110 (refer to FIG. 1), a controller 180 (refer to FIG. 1), and a power receiving unit 191 (refer to FIG. 1).

Referring to FIG. 20, a message indicating that wireless charging has been approved and a message 279 for selecting whether or not to start wireless charging may be displayed on the display unit 251. Accordingly, the user may select whether or not to start wireless charging.

Though a message indicating that wireless charging has been approved and a message for selecting whether or not to start wireless charging are displayed at the same time in the drawing, they may not be necessarily displayed at the same time. Specifically, only either one of the message indicating that wireless charging has been approved and the message for selecting whether or not to start wireless charging may be displayed on the display unit 251. On the other hand, though not shown in the drawing, a message containing remaining points information may be displayed on the display unit 251.

Then, the mobile terminal 200 may request power transmission and then receive power in a wireless manner from the wireless charging pad 300. Though not shown in the drawing, the controller 180 may measure an amount of power received in a wireless manner from the wireless charging pad 300, and the display unit 251 may display an icon, for example, progress bar, indicating power amount information. Furthermore, the display unit 251 may display an icon indicating that wireless charging is being carried out.

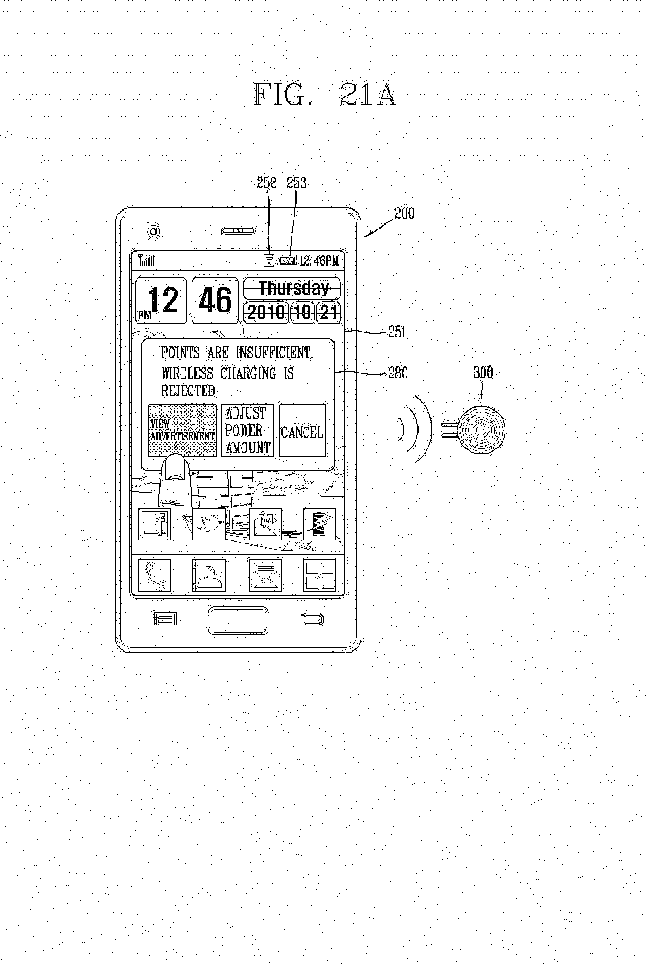

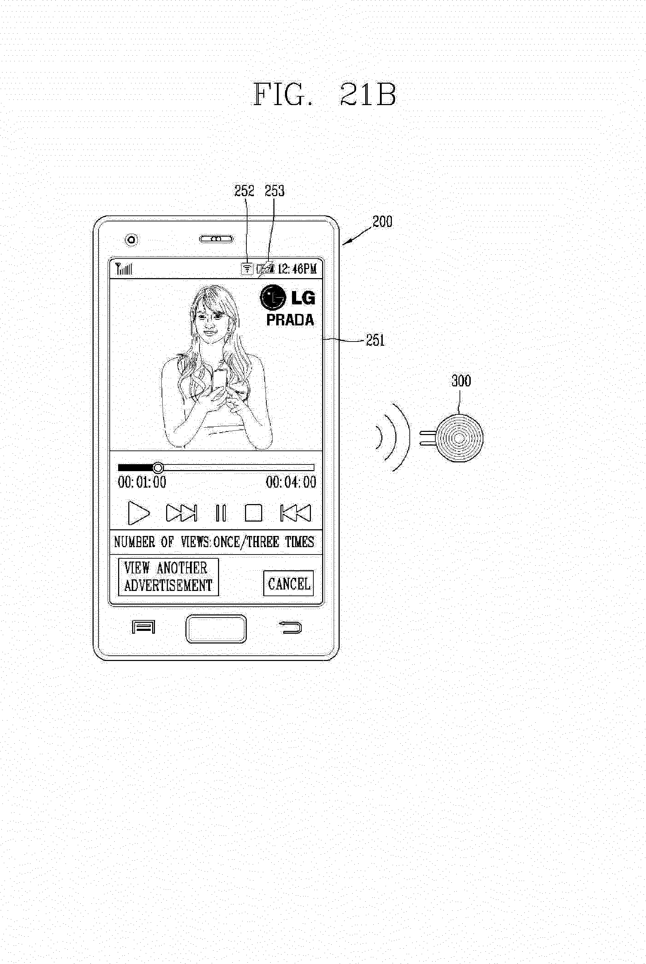

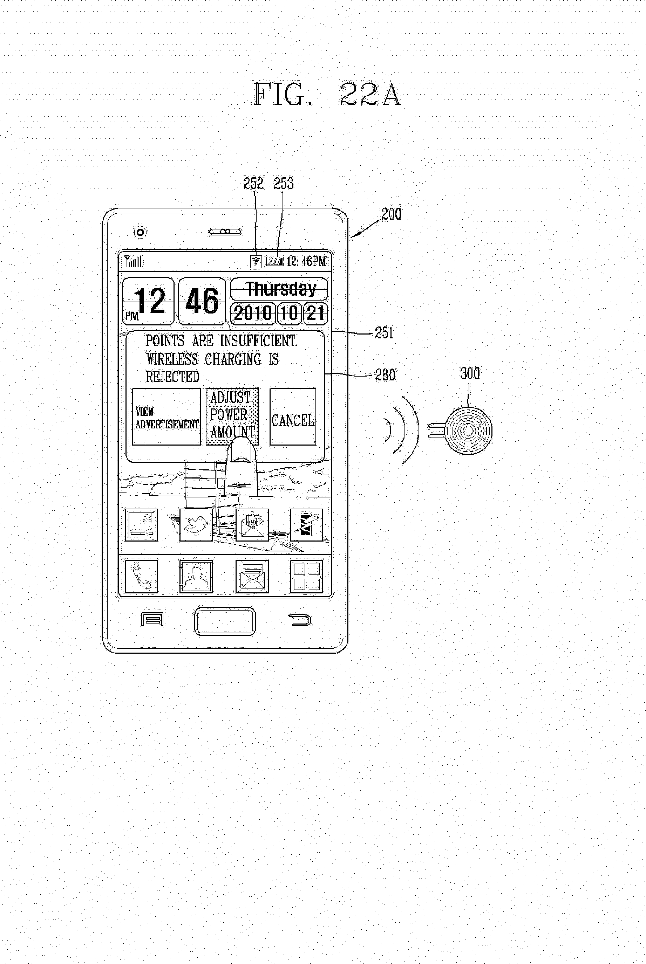

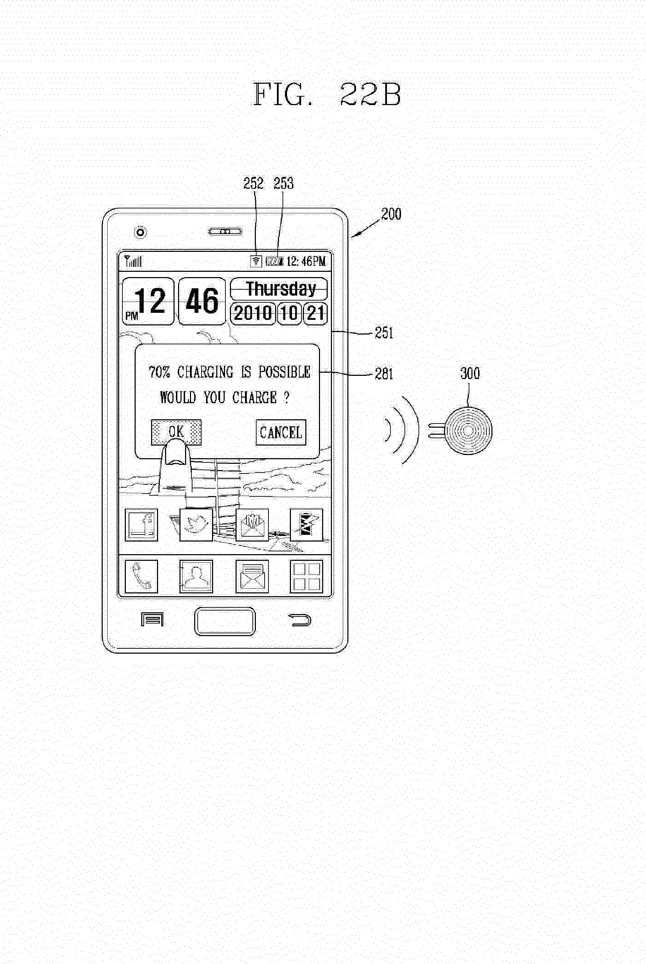

FIGS. 21A and 21B are conceptual views illustrating a third operation example of a mobile terminal according to FIG. 18. FIGS. 22A and 22B are conceptual views illustrating a fourth operation example of a mobile terminal according to FIG. 18. The mobile terminal 200 may include a wireless communication unit 110 (refer to FIG. 1), a controller 180 (refer to FIG. 1), and a power receiving unit 191 (refer to FIG. 1).

Hereinafter, when the point information does not satisfy power receiving condition information, the operation examples of the mobile terminal 200 for an embodiment of displaying a wireless charging reject message, an embodiment of displaying advertisement content, an embodiment of adjusting an amount of power, and an embodiment of performing payment using another payment means, respectively, will be described with reference to the accompanying drawings.

### 1. Display of wireless charging reject message

Referring to FIGS. 21A and 12A, a message 280 indicating that wireless charging has been rejected due to insufficient points may be displayed on the display unit 251. At this time, a message 280 indicating that wireless charging has been rejected may include an icon corresponding to an advertisement view function (hereinafter, referred to as an "advertisement view icon") and an icon corresponding to a power amount adjustment function (hereinafter, referred to as a "power amount adjustment icon").

### 2. Display of advertisement content

When a control command for an advertisement view icon contained in the message 280 indicating that wireless charging has been rejected, referring to FIG. 21B, the controller 180 may display advertisement content on the display unit 251 as many as a preset number for a preset time.

The controller 180 may control the power receiving unit 191 to receive power in a wireless manner from the wireless charging pad 300 based on history information displayed with advertisement content on the display unit 251. Here, the history information may include at least one of display time information and display number information of advertisement content.

The controller 180 may determine whether or not to receive power from the wireless charging pad 300 using history information displayed with advertisement content and power receiving condition information. In other words, when the history information satisfies a power receiving condition, the controller 180 may control the power receiving unit 191 to receive power in a wireless manner from the wireless charging pad 300.

On the other hand, though not shown in the drawing, when the point information does not satisfy power receiving condition information, advertisement content may be immediately displayed.

### 3. Power amount adjustment

When a touch input onto a power amount adjustment icon contained in the message 280 indicating that wireless charging has been rejected, referring to FIG. 22B, the mobile terminal 200 may adjust an amount of power to be received in a wireless manner by the power receiving unit 191 from the wireless charging pad 300 based on point information. The display unit 251 may display a message 281 indicating the adjusted power amount information.

On the other hand, though not shown in the drawing, the display unit 251 may display point information. The user may directly adjust an amount of power to be received in a wireless manner by the power receiving unit 191 from the wireless charging pad 300.

Then, the mobile terminal 200 may receive power in a wireless manner from the wireless charging pad 300 as much as the adjusted amount of power.

On the other hand, though not shown in the drawing, when the point information does not satisfy power receiving condition information, the amount of power may be immediately adjusted.

### 4. Execution of payment as much as the remaining points using another payment means

Though not shown in the drawing, the message 280 indicating that wireless charging has been rejected may include an icon corresponding to a function of performing payment using another payment means (hereinafter, referred to as a "payment icon"). At this time, when a touch input onto the payment icon is sensed, a payment window may be displayed on the display unit 251. The payment window may include a payment window for retail mobile phone payment, card payment, wire transfer payment and another point payment.

Furthermore, though not shown in the drawing, when the point information does not satisfy power receiving condition information, a payment window may be immediately displayed on the display unit 251.

According to an embodiment of present disclosure, the foregoing method may be implemented as codes readable by a processor on a medium written by a program. Examples of the processor-readable media may include ROM, RAM, CD-ROM, magnetic tape, floppy disk, and optical data storage device, and the like, and also include a device implemented in the form of a carrier wave (for example, transmission via the Internet).

The configurations and methods according to the above-described embodiments will not be applicable in a limited way to the foregoing mobile terminal, and all or part of each embodiment may be selectively combined and configured to make various modifications thereto.

## Claims

1. A mobile terminal(1 00), comprising:
a power receiving unit(191) formed to receive power in a wireless manner from a wireless charging pad;
a wireless communication unit(110) configured to transmit user information to a server or the wireless charging pad, and receive advertisement content associated with the user information from the server or the wireless charging pad;
a display unit(151) formed to display the advertisement content; and
a controller(180) configured to manage history information displayed with the advertisement content on the display unit(151) and control the power receiving unit(191) to receive power in a wireless manner from the wireless charging pad based on the history information.

2. The mobile terminal(100) of claim 1, wherein the wireless communication unit(110) receives service guide information for configuring power receiving condition information from the server or the wireless charging pad, and
the controller(180) displays the received service guide information on the display unit(151), and configures the power receiving condition information based on the user's selection of the displayed service guide information.

3. The mobile terminal(100) of claim 2, wherein the controller(180) determines whether or not to receive power from the wireless charging pad using the history information and the power receiving condition information displayed with the advertisement content.

4. The mobile terminal(100) of claim 3, wherein the controller(180) controls the power receiving unit(191) to receive power in a wireless manner from the wireless charging pad when the history information satisfies the power receiving condition, and displays a popup window indicating that the power receiving condition is not satisfied on the display unit(151) when the history information does not satisfies the power receiving condition.

5. The mobile terminal(100) of one of any claims 3 and 4, wherein the controller(180) adjusts an amount of power to be received in a wireless manner by the power receiving unit from the wireless charging pad based on the history information when the history information does not satisfy the power receiving condition.

6. The mobile terminal(100) of claim 2, wherein the controller(180) transmits the history information and the power receiving condition information to the server or the wireless charging pad, and receives any one of a wireless charging accept message and a wireless charging reject message from the server or the wireless charging pad.

7. The mobile terminal(100) of claim 2, wherein the service guide information comprises at least one of an amount of power to be received in a wireless manner from the wireless charging pad, a time point of displaying the advertisement content based on the power receiving time point, a number of displaying the advertisement content, and a time of displaying the advertisement content.

8. The mobile terminal(100) of claim 7, wherein the controller(180) manages the history information in a different manner according to the time point of displaying the advertisement content based on the power receiving time point.

9. The mobile terminal(100) of one of any claims 7 and 8, wherein the controller(180) controls the power receiving unit(191) to receive power in a wireless manner from the wireless charging pad regardless of whether or not to display the advertisement content when the time point of displaying the advertisement content is configured subsequent to the power receiving time point, and stores history information on the display of the advertisement content in a memory to use it when required to receive power in a wireless manner again from the wireless charging pad later.

10. The mobile terminal(100) of one of any claims 1 and 2, wherein the controller(180) measures an amount of power received in a wireless manner by the power receiving unit(191) from the wireless charging pad, and displays a progress bar indicating the power amount information on the display unit(151).

11. A control method of a mobile terminal comprising a power receiving unit formed to receive power in a wireless manner from a wireless charging pad, the method comprising:
transmitting user information to a server or the wireless charging pad when the wireless charging pad is sensed(S110);
receiving advertisement content associated with the user information from the server or the wireless charging pad(S120);
displaying the advertisement content on the display unit(S130);
managing history information displayed with the advertisement content on the display unit(S140); and
controlling the power receiving unit to receive power in a wireless manner from the wireless charging pad based on the history information(S150).
